(19) Europäisches Patentamt
European Patent Office
Office européen des brevets

(11) EP 4 607 639 A1

(12) **EUROPEAN PATENT APPLICATION**
published in accordance with Art. 153(4) EPC

(43) Date of publication:
**27.08.2025 Bulletin 2025/35**

(21) Application number: **23891321.4**

(22) Date of filing: **26.10.2023**

(51) International Patent Classification (IPC):
***H01M 10/052*** *(2010.01)* ***H01M 4/36*** *(2006.01)*
***H01M 4/587*** *(2010.01)* ***H01M 10/0567*** *(2010.01)*
***H01M 10/0568*** *(2010.01)* ***H01M 10/0569*** *(2010.01)*

(52) Cooperative Patent Classification (CPC):
**H01M 4/36; H01M 4/587; H01M 10/052; H01M 10/0567; H01M 10/0568; H01M 10/0569**

(86) International application number:
**PCT/JP2023/038691**

(87) International publication number:
**WO 2024/106166 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.11.2022 JP 2022183483**

(71) Applicant: **Nippon Shokubai Co., Ltd.**
**Osaka-shi, Osaka 541-0043 (JP)**

(72) Inventors:
- **MIZUNO, Hiroyuki**
  **Suita-shi, Osaka 564-0034 (JP)**
- **ITO, Hirokazu**
  **Suita-shi, Osaka 564-0034 (JP)**
- **KITANO, Tomoyuki**
  **Suita-shi, Osaka 564-0034 (JP)**

(74) Representative: **Germain Maureau**
**12, rue Boileau**
**69006 Lyon (FR)**

(54) **NON-AQUEOUS ELECTROLYTE SECONDARY BATTERY**

(57) Provided is a non-aqueous electrolyte secondary battery provided with: a non-aqueous electrolytic liquid that contains a sulfonylimide compound and a chain carbonate-based solvent and/or a saturated cyclic carbonate-based solvent, and contains at least one selected from the group consisting of a carbonate species, an unsaturated cyclic carbonate-based compound, a compound represented by General Formula (4) of $MPO_cF_d$, and a phosphorus atom-containing compound represented by General Formula (5) of $[-P(=O)(OR^1)O-]_n$; a negative electrode containing a first graphite having a D/G ratio of greater than 0.7 or a full-width at half-maximum of a G-band of greater than 28 $cm^{-1}$, and containing a second graphite having a D/G ratio or a full-width at half-maximum of the G-band of the corresponding value or less at an amount of from 0 mass% to 10 mass% per 100 mass% of the total amount of the first graphite and the second graphite; and a positive electrode.

EP 4 607 639 A1

## Description

### Technical Field

The present disclosure relates to a non-aqueous electrolyte secondary battery.

### Background Art

In order to improve battery performance of a secondary battery such as a lithium-ion secondary battery, various studies have been conducted on non-aqueous electrolytic liquids used in secondary batteries and on the materials thereof. Through previously conducted examinations, the inventors of the present application discovered that a non-aqueous electrolytic liquid containing a sulfonylimide compound such as lithium bis(fluorosulfonyl)imide as an electrolyte salt improves battery performance such as high-temperature durability and charge/discharge cycle characteristics of a lithium-ion secondary battery.

As a result of further examinations, the present inventors discovered that a battery that uses a non-aqueous electrolytic liquid containing a sulfonylimide compound self-discharges significantly from a fully charged state during battery storage in comparison to a battery that uses a non-aqueous electrolytic liquid containing only a lithium compound other than a sulfonylimide compound (such as, for example, $LiPF_6$, and $LiBF_4$) as an electrolyte salt, and thus there is room for improvement in battery storage characteristics. Therefore, the present inventors have proposed various techniques for improving battery storage characteristics (for example, see Patent Document 1).

In addition, the present inventors have also proposed, as a secondary battery provided with a non-aqueous electrolytic liquid, a non-aqueous electrolyte secondary battery including, as constituent materials, a non-aqueous electrolytic liquid containing a sulfonylimide compound and a sulfone compound, and a negative electrode containing a specific carbon material (Patent Document 2).

Patent Documents 3 to 6 propose, as a non-aqueous electrolytic liquid constituting a secondary battery, for example, a non-aqueous electrolytic liquid containing an additive such as trimethylsilyl polyphosphate.

### Citation List

#### Patent Document

Patent Document 1: WO 2022/065198
Patent Document 2: JP 6646522 B
Patent Document 3: JP 2016-91785 A
Patent Document 4: JP 2016-192401 A
Patent Document 5: KR 2017-0000903 A
Patent Document 6: WO 2016/209840


### Summary of Invention

#### Technical Problem

Patent Document 1 indicates that a fluorophosphate compound such as vinylene carbonate (VC) or lithium difluorophosphate ($LiPO_2F_2$) is added to a non-aqueous electrolytic liquid containing a sulfonylimide compound, or a carbonate species such as $CO_2$ is dissolved in the non-aqueous electrolytic liquid containing the sulfonylimide compound, and thereby self-discharge of a battery using the non-aqueous electrolytic liquid is suppressed. However, the crystallinity of graphite used as a negative electrode active material is not examined or described.

In Patent Document 2, the self-discharge of a battery that uses a non-aqueous electrolytic liquid containing a sulfonylimide compound is not examined or described. Incidentally, in the non-aqueous electrolyte secondary battery disclosed in Patent Document 2, the negative electrode serves as a constituent material and is made of a carbon material having a Raman spectrum intensity ratio R ((peak intensity of 1350 $nm^{-1}$)/(peak intensity of 1580 $cm^{-1}$)) of $0.1 \leq R \leq 0.5$ when excited by an argon laser having a wavelength of 532 cm. However, this type of carbon material (graphite) is highly crystalline and relatively expensive.

In Patent Documents 3 to 6, as the configurations of the secondary batteries described therein, there is no detailed description relating to a negative electrode or a non-aqueous electrolytic liquid containing a sulfonylimide compound, and the crystallinity of the graphite used as a negative electrode active material is not examined.

The present disclosure was developed in view of the foregoing, and an object of the present disclosure is to provide a non-aqueous electrolyte secondary battery provided with a non-aqueous electrolytic liquid containing a sulfonylimide compound, in which self-discharge is suppressed (storage characteristics are improved) by combining an additive used in the non-aqueous electrolytic liquid with a negative electrode that contains, as a negative electrode active material, relatively inexpensive low-crystallinity graphite.

Solution to Problem

The present inventors discovered that in a non-aqueous electrolyte secondary battery including a non-aqueous electrolytic liquid containing a sulfonylimide compound, a first battery using a negative electrode containing low-crystallinity graphite (for example, natural graphite, "first graphite" described below) undergoes greater self-discharge during battery storage than a second battery using a negative electrode containing high-crystallinity graphite (for example, artificial graphite, "second graphite" described below). Based on this finding, the present inventors conducted further examinations and discovered that a third battery in which a negative electrode containing low-crystallinity graphite is used in combination with a non-aqueous electrolytic liquid containing a specific additive undergoes lower self-discharge than the second battery.

In order to achieve the above object, the disclosed technique aims to suppress self-discharge of a non-aqueous electrolyte secondary battery containing a sulfonylimide compound by using low-crystallinity graphite in combination with a specific additive. Specifically, the present disclosure is as follows.

A non-aqueous electrolyte secondary battery of the present disclosure is characterized by being provided with:

a non-aqueous electrolytic liquid containing, as an electrolyte salt, a sulfonylimide compound represented by General Formula (1):

(1): $LiN(RSO_2)(FSO_2)$

(where R represents a fluorine atom, an alkyl group having 1 to 6 carbon atoms, or a fluoroalkyl group having 1 to 6 carbon atoms),

and as an electrolyte solvent, at least one carbonate-based solvent selected from the group consisting of a chain carbonate-based solvent and a saturated cyclic carbonate-based solvent, and the non-aqueous electrolytic liquid having dissolved therein as an additive, at least one carbonate species selected from the group consisting of carbon dioxide ($CO_2$), carbon monoxide (CO), a bicarbonate ion ($HCO3^-$), and a carbonate ion ($CO_3^{2-}$), and/or containing at least one selected from the group consisting of an unsaturated cyclic carbonate-based compound, a compound represented by General Formula (4):

(4): $MPO_cF_d$

(M: alkali metal element, c: $1 \leq c \leq 3$, d: $1 \leq d \leq 3$),

and a phosphorus atom-containing compound represented by General Formula (5);

(5): $[-P(=O)(OR^1)O-]_n$

(in General Formula (5), $R^1$ represents an alkyl group having 1 to 6 carbon atoms (which may have a substituent), a fluoroalkyl group having 1 to 6 carbon atoms (which may have a substituent), an aryl group (which may have a substituent), a silyl group (which may have a substituent), an alkali metal atom, an onium salt, or a hydrogen atom, and n is 2 or greater);

a negative electrode containing, as a negative electrode active material, a first graphite having a peak area ratio (D/G ratio) of a D-band and a G-band analyzed by Raman spectroscopy of greater than 0.7, and containing a second graphite having a D/G ratio of 0.7 or less at an amount of from 0 mass% to 10 mass% per 100 mass% of the total amount of the first graphite and the second graphite; and

a positive electrode.

Moreover, a non-aqueous electrolyte secondary battery of the present disclosure is characterized by being provided with: the above-described non-aqueous electrolytic liquid; and

a negative electrode containing, as a negative electrode active material, a first graphite having a full-width at half-maximum of a G-band analyzed by Raman spectroscopy of greater than 28 $cm^{-1}$, and containing a second graphite having a full-width at half-maximum of the G-band of 28 $cm^{-1}$ or less at an amount of from 0 mass% to 10 mass% per

100 mass% of the total amount of the first graphite and the second graphite; and
a positive electrode.

In the non-aqueous electrolyte secondary battery of the present disclosure, the sulfonylimide compound represented by General Formula (1) may include $LiN(FSO_2)_2$. The unsaturated cyclic carbonate-based compound may include vinylene carbonate. The compound represented by General Formula (4) may include at least one selected from the group consisting of $Li_2PO_3F$ and $LiPO_2F_2$. The compound represented by General Formula (5) may include at least one selected from the group consisting of trimethylsilyl polyphosphate, ethyl polyphosphate, (triisopropylsilyl) polyphosphate, and [(tert-butyl) dimethylsilyl] polyphosphate. The additive includes a phosphorus atom-containing compound represented by General Formula (5), and the compound represented by General Formula (5) may include at least one selected from the group consisting of trimethylsilyl polyphosphate, ethyl polyphosphate, (triisopropylsilyl) polyphosphate, and [(tert-butyl) dimethylsilyl] polyphosphate. The electrolyte salt may include at least one selected from the group consisting of a compound represented by General Formula (2):

(2): $LiPF_a(C_mF_{2m+1})_{6-a}$

(where a: $0 \le a \le 6$, m: $1 \le m \le 4$),

a compound represented by General Formula (3):

(3): $LiBF_b(C_nF_{2n+1})_{4-b}$

(where b: $0 \le b \le 4$, n: $1 \le n \le 4$),
and $LiAsF_6$.

## Advantageous Effects of Invention

According to the present disclosure, in a non-aqueous electrolyte secondary battery provided with a non-aqueous electrolytic liquid containing a sulfonylimide compound, self-discharge can be suppressed (storage characteristics can be improved) by combining an additive used in a non-aqueous electrolytic liquid with a negative electrode that contains, as a negative electrode active material, relatively inexpensive low-crystallinity graphite.

## Brief Description of Drawings

FIG. 1 is a D/G chart (Raman spectrum) of graphite "MAGE" used in a production example.

FIG. 2 is a D/G chart of graphite "SFG15" used in a production example.

FIG. 3 is a D/G chart of graphite "SLP50" used in a production example.

FIG. 4 is a D/G chart of graphite "O-MAC" used in a production example.

FIG. 5 is a D/G chart of graphite "SMG" used in a production example.

FIG. 6 is a graph showing a $^{31}P$-NMR spectrum of trimethylsilyl polyphosphate (PPSE-1), a reagent used in Example 4 series.

FIG. 7 is a graph showing a $^{31}P$-NMR spectrum of trimethylsilyl polyphosphate (PPSE-2) synthesized in Example 4 series.

FIG. 8 is a graph showing a $^{31}P$-NMR spectrum of trimethylsilyl polyphosphate (PPSE-3) synthesized in Example 4 series.

## Description of Embodiments

Hereinafter, an embodiment of the present disclosure will be described in detail with reference to the drawings.

The following description of a preferred embodiment is merely exemplary in nature and is in no way intended to limit the present invention, its application, or uses thereof.

Non-Aqueous Electrolyte Secondary Battery

The term non-aqueous electrolyte secondary battery according to the present embodiment refers to a secondary battery provided with a non-aqueous electrolytic liquid. The non-aqueous electrolyte secondary battery includes a non-aqueous electrolytic liquid, a positive electrode, and a negative electrode.

Non-Aqueous Electrolytic Liquid

The non-aqueous electrolytic liquid contains an electrolyte salt, an electrolyte solvent, and an additive.

Electrolyte Salt

The electrolyte salt includes a sulfonylimide compound (a fluorine-containing sulfonylimide salt referred to hereinafter as a "sulfonylimide compound (1)") represented by General Formula (1).
[Formula 1]

(1): $LiN(RSO_2)(FSO_2)$

That is, the non-aqueous electrolyte secondary battery according to the present embodiment includes, as one constituent material, a non-aqueous electrolytic liquid containing, as an electrolyte salt, the sulfonylimide compound (1) as an essential component.

In General Formula (1), R represents a fluorine atom, an alkyl group having 1 to 6 carbon atoms, or a fluoroalkyl group having 1 to 6 carbon atoms.

Examples of the alkyl group having 1 to 6 carbon atoms include a methyl group, an ethyl group, a propyl group, an isopropyl group, a butyl group, a pentyl group, and a hexyl group. Among the alkyl groups having 1 to 6 carbon atoms, a linear or branched alkyl group having 1 to 6 carbon atoms is preferable, and a linear alkyl group having 1 to 6 carbon atoms is more preferable.

Examples of the fluoroalkyl group having 1 to 6 carbon atoms include an alkyl group having 1 to 6 carbon atoms with some or all of its hydrogen atoms substituted with fluorine atoms. Examples of the fluoroalkyl group having 1 to 6 carbon atoms include a fluoromethyl group, a difluoromethyl group, a trifluoromethyl group, a fluoroethyl group, a difluoroethyl group, a trifluoroethyl group, and a pentafluoroethyl group. In particular, the fluoroalkyl group may be a perfluoroalkyl group.

As the substituent R, a fluorine atom and a perfluoroalkyl group (for example, a perfluoroalkyl group having 1 to 6 carbon atoms such as a trifluoromethyl group, a pentafluoroethyl group, and a heptafluoropropyl group) are preferable, a fluorine atom, a trifluoromethyl group, and a pentafluoroethyl group are more preferable, a fluorine atom and a trifluoromethyl group are still more preferable, and a fluorine atom is yet even more preferable.

Specific examples of the sulfonylimide compound (1) include lithium bis(fluorosulfonyl)imide ($LiN(FSO_2)_2$, LiFSI), lithium (fluorosulfonyl)(methylsulfonyl)imide, lithium (fluorosulfonyl)(ethylsulfonyl)imide, lithium (fluorosulfonyl)(trifluoromethylsulfonyl)imide, lithium (fluorosulfonyl)(pentafluoroethylsulfonyl)imide, and lithium (fluorosulfonyl)(heptafluoropropylsulfonyl)imide. A single type of the sulfonylimide compound may be used alone, or two or more types thereof may be used in combination. As the sulfonylimide compound (1), a commercially available product may be used, or a compound obtained by synthesis through a known method may be used.

Among the sulfonylimide compounds (1), from the viewpoint of improving battery performance, $LiN(FSO_2)_2$, lithium (fluorosulfonyl) (trifluoromethylsulfonyl)imide, and lithium (fluorosulfonyl) (pentafluoroethylsulfonyl)imide are preferable, and $LiN(FSO_2)_2$ is more preferable. In other words, in the non-aqueous electrolytic liquid, $LiN(FSO_2)_2$ is preferably included as the sulfonylimide compound (1).

From the viewpoint of improving battery performance, a concentration (a content, or a total content when two or more compounds are used in combination) of the sulfonylimide compound (1) in the non-aqueous electrolytic liquid is preferably 0.01 mol/L or more, more preferably 0.05 mol/L or more, still more preferably 0.1 mol/L or more, further preferably 0.2 mol/L or more, and still further preferably 0.5 mol/L or more. In addition, from the viewpoint of suppressing a decrease in battery performance due to an increase in viscosity of the electrolytic liquid and suppressing self-discharge of the battery, the concentration of the sulfonylimide compound (1) in the non-aqueous electrolytic liquid is preferably 5 mol/L or less, more preferably 3 mol/L or less, and still more preferably 2 mol/L or less.

From the viewpoint of improving battery performance, the content of the sulfonylimide compound (1) in the non-aqueous electrolytic liquid is preferably 10 mol% or more, more preferably 20 mol% or more, still further preferably 30 mol%

or more, and yet even further preferably 50 mol% or more, in a total of 100 mol% of the electrolyte salt contained in the non-aqueous electrolytic liquid.

From the viewpoint of improving battery performance, the content of the sulfonylimide compound (1) in the non-aqueous electrolytic liquid is preferably 1 mass% or more, more preferably 3 mass% or more, and still more preferably 5 mass% or more in relation to the entire non-aqueous electrolytic liquid (in relation to 100 mass% of a total amount of components contained in the non-aqueous electrolytic liquid). **In** addition, from the viewpoint of suppressing a decrease in battery performance due to an increase in the viscosity of the electrolytic liquid, the content is preferably 70 mass% or less, more preferably 50 mass% or less, further preferably 30 mass% or less, and still further preferably 20 mass% or less in relation to 100 mass% of the total amount of the components contained in the non-aqueous electrolytic liquid.

The electrolyte salt (lithium salt) may only include the sulfonylimide compound (1), but may include another electrolyte salt (an electrolyte salt other than the sulfonylimide compound (1)). Examples of the other electrolyte salt include imide salts and non-imide salts.

Examples of the imide salt include another fluorine-containing sulfonylimide salt (hereinafter, referred to as "the other sulfonylimide compound") different from the sulfonylimide compound (1). Examples of the other sulfonylimide compound include a non-lithium salt of the fluorine-containing sulfonylimides exemplified as the sulfonylimide compound (1) (for example, a salt in which the lithium (ion) in the sulfonylimide compound (1) is substituted with a cation other than a lithium ion). Examples of the salt substituted with a cation other than a lithium ion include an alkali metal salt such as a sodium salt, a potassium salt, a rubidium salt, and a cesium salt; an alkaline earth metal salt such as a beryllium salt, a magnesium salt, a calcium salt, a strontium salt, and a barium salt; an aluminum salt; an ammonium salt; and a phosphonium salt. A single type of the other sulfonylimide compound may be used alone, or two or more types thereof may be used in combination. Moreover, as the other sulfonylimide compound, a commercially available product may be used, or a compound obtained by synthesis through a known method may be used.

Examples of the non-imide salt include a salt of a non-imide anion and a cation (a lithium ion and a cation exemplified above). Examples of the non-imide salt include a lithium salt such as a compound represented by General Formula (2):

[Formula 2]

$$(2): \quad LiPF_a(C_mF_{2m+1})_{6-a}$$

(where a: $0 \le a \le 6$, m: $1 \le m \le 4$)

(hereinafter, such a compound is referred to as "fluorophosphate compound (2)"), a compound represented by General Formula (3):

[Formula 3]

$$(3): \quad LiBF_6(C_nF_{2n+1})_{4-b}$$

(where b: $0 \le b \le 4$, n: $1 \le n \le 4$)

(hereinafter, such a compound is referred to as "fluoroborate compound (3)"), lithium hexafluoroarsenate ($LiAsF_6$), $LiSbF_6$, $LiClO_4$, LiSCN, $LiAlF_4$, $CF_3SO_3Li$, $LiC[(CF_3SO_2)]_{3]}$, $LiN(NO_2)$, and $LiN[(CN)_2]$; and a non-lithium salt (for example, a salt in which the lithium (ion) in any of the lithium salt is substituted with a cation exemplified above (for example, $NaBF_4$, $NaPF_6$, and $NaPF_3(CF_3)_3$). A single type of the non-imide salt may be used alone, or two or more types thereof may be used in combination. Moreover, as the non-imide salt, a commercially available product may be used, or a non-imide salt obtained by synthesis through a known method may be used.

Among the other electrolytes, a non-imide salt is preferable from the viewpoints of ion conductivity and cost, and a fluorophosphate compound (2), a fluoroborate compound (3), and $LiAsF_6$ are preferable, and a fluorophosphate compound (2) is more preferable.

Examples of the fluorophosphate compound (2) include $LiPF_6$, $LiPF_3(CF_3)_3$, $LiPF_3(C_2F_5)_3$, $LiPF_3(C_3F_7)_3$, and $LiPF_3(C_4F_9)_3$. Among the fluorophosphate compounds (2), $LiPF_6$ and $LiPF_3(C_2F_5)_3$ are preferable, and $LiPF_6$ is more preferable.

Examples of the fluoroborate compound (3) include $LiBF_4$, $LiBF(CF_3)_3$, $LiBF(C_2F_5)_3$, and $LiBF(C_3F_7)_3$. Among the fluoroborate compounds (3), $LiBF_4$ and $LiBF(CF_3)_3$ are preferable, and $LiBF_4$ is more preferable.

Note that these electrolyte salts (the sulfonylimide compound (1), the other electrolyte salt, and the like) may be present (contained) as ions in the non-aqueous electrolytic liquid.

As a salt composition of the electrolyte, the electrolyte salt may have a single salt composition of the sulfonylimide compound (1), or have a mixed salt composition including the sulfonylimide compound (1) and another electrolyte. When an electrolyte salt having a mixed salt composition is used, an electrolyte salt having a mixed salt composition including the

sulfonylimide compound (1) and the fluorophosphate compound (2) is preferable, and an electrolyte salt having a mixed salt composition including $LiN(FSO_2)_2$ and $LiPF_6$ is more preferable.

When an electrolyte salt having a mixed salt composition containing the sulfonylimide compound (1) and another electrolyte is used, from the viewpoint of improving battery performance, a concentration of the other electrolyte (a content, or a total content when two or more other electrolytes are used in combination) in the non-aqueous electrolytic liquid is preferably 0.1 mol/L or more, more preferably 0.2 mol/L or more, still more preferably 0.5 mol/L or more, yet even more preferably 0.7 mol/L or more, and still even more preferably 1 mol/L or more. In addition, from the viewpoints of suppressing a decrease in battery performance due to an increase in viscosity of the electrolytic liquid and suppressing self-discharge of the cell, the concentration of the other electrolyte is preferably 5 mol/L or less, more preferably 3 mol/L or less, even more preferably 2 mol/L or less, and still even more preferably 1.5 mol/L or less.

From the viewpoint of improving battery performance, a total concentration of the electrolyte salts in the non-aqueous electrolytic liquid is preferably 0.8 mol/L or more, more preferably 1 mol/L or more, and still more preferably 1.2 mol/L or more. In addition, from the viewpoint of suppressing a decrease in battery performance due to an increase in viscosity of the electrolytic liquid, the total concentration of the electrolyte salts is preferably 5 mol/L or less, more preferably 3 mol/L or less, and still more preferably 2 mol/L or less.

From the viewpoint of improving battery performance, it is preferable to increase the concentration of the sulfonylimide compound (1). A ratio (sulfonylimide compound (1)):(the other electrolyte) (a molar ratio of the concentration of the sulfonylimide compound (1) to the concentration of the other electrolyte) is preferably 1:25 or more, more preferably 1:10 or more, even more preferably 1:8 or more, yet even more preferably 1:5 or more, still even more preferably 1:2 or more, and particularly preferably 1:1 or more, and is preferably 25:1 or less, more preferably 10:1 or less, even more preferably 5:1 or less, and yet even more preferably 2:1 or less.

Electrolyte Solvent

The electrolyte solvent includes at least one carbonate-based solvent (hereinafter, also referred to as a "specific carbonate-based solvent") selected from the group consisting of a chain carbonate-based solvent and a saturated cyclic carbonate-based solvent. That is, the non-aqueous electrolyte secondary battery according to the present embodiment includes, as one constituent material, a non-aqueous electrolytic liquid containing, as an essential component, a chain carbonate-based solvent and/or a saturated cyclic carbonate-based solvent as an electrolyte solvent together with the sulfonylimide compound (1). In other words, the electrolyte solvent may include only a chain carbonate-based solvent of one or more types, may include only a saturated cyclic carbonate-based solvent of one or more types, or may be a mixed carbonate-based solvent including a chain carbonate-based solvent and a saturated cyclic carbonate-based solvent. Among these, a mixed carbonate-based solvent is preferable, and an electrolyte solvent including EMC and EC described below is more preferable.

Examples of the chain carbonate- (carbonate ester-) based solvent include dimethyl carbonate (DMC), ethyl methyl carbonate (EMC), diethyl carbonate (DEC), diphenyl carbonate, and methyl phenyl carbonate. A single type of the chain carbonate-based solvent may be used alone, or two or more types thereof may be used in combination. Among the chain carbonate-based solvents, DMC, EMC, and DEC are preferable, and EMC is more preferable.

Examples of the saturated cyclic carbonate-based solvent include ethylene carbonate (EC), propylene carbonate (PC), 2,3-dimethylethylene carbonate, 1,2-butylene carbonate, and erythritan carbonate. A single type of the saturated cyclic carbonate-based solvent may be used alone, or two or more types thereof may be used in combination. Among the saturated cyclic carbonate-based solvents, EC and PC are preferable, and EC is more preferable.

As described above, the electrolyte solvent may only include the specific carbonate-based solvent, but may include another electrolyte solvent (an electrolyte solvent other than the specific carbonate-based solvent). The other electrolyte solvent is not particularly limited as long as the solvent thereof can dissolve and disperse the electrolyte salt, and examples of the other electrolyte solvent include a non-aqueous solvent other than the specific carbonate-based solvent, and any solvent generally used in a battery can be used.

As the non-aqueous solvent, a solvent having a large dielectric constant, high solubility of the electrolyte, a boiling point of 60°C or higher, and a wide electrochemical stability range is preferable. The non-aqueous solvent is more preferably an organic solvent with a low water content. Examples of such an organic solvent include, other than the specific carbonate-based solvent, a cyclic carbonate-based solvent having an unsaturated bond such as methylvinylene carbonate, ethylvinylene carbonate, 2-vinylethylene carbonate, and phenylethylene carbonate; a fluorine-containing cyclic carbonate-based solvent such as fluoroethylene carbonate (FEC), 4,5-difluoroethylene carbonate, and trifluoropropylene carbonate; an ether-based solvent such as ethylene glycol dimethyl ether, ethylene glycol diethyl ether, tetrahydrofuran, 2-methyltetrahydrofuran, 2,5-dimethyltetrahydrofuran, tetrahydropyran, a crown ether, triethylene glycol dimethyl ether, tetraethylene glycol dimethyl ether, 1,4-dioxane, and 1,3-dioxolane; an aromatic carboxylic ester-based solvent such as methyl benzoate and ethyl benzoate; a lactone-based solvent such as $\gamma$-butyrolactone, $\gamma$-valerolactone, and $\delta$-valerolactone; a phosphate ester-based solvent such as trimethyl phosphate, ethyl dimethyl phosphate, diethyl

methyl phosphate, and triethyl phosphate; a nitrile-based solvent such as acetonitrile, propionitrile, methoxypropionitrile, glutaronitrile, adiponitrile, 2-methylglutaronitrile, valeronitrile, butyronitrile, and isobutyronitrile; a sulfur compound-based solvent such as dimethyl sulfone, ethyl methyl sulfone, diethyl sulfone, sulfolane, 3-methyl sulfolane, and 2,4-dimethylsulfolane; an aromatic nitrile-based solvent such as benzonitrile and tolunitrile; nitromethane, 1,3-dimethyl-2-imidazolidinone, 1,3-dimethyl-3,4,5,6-tetrahydro-2(1H)-pyrimidinone, 3-methyl-2-oxazolidinone and the like; and a chain ester solvent such as ethyl acetate, butyl acetate, and propyl propionate. A single type of the solvent may be used alone, or two or more types thereof may be used in combination.

The electrolytic solvent may be used as a medium for a polymer or a polymer gel that may be used in place of the electrolyte solvent. When a polymer or a polymer gel is used in place of the electrolyte solvent, a method described below may be employed. That is, examples of the method that may be employed include a method in which a solution prepared by dissolving an electrolyte salt in an electrolyte solvent is added dropwise to a polymer formed into a film by a known method to impregnate and support the electrolyte salt and the electrolyte solvent; a method in which a polymer and an electrolyte salt are melted and mixed at a temperature higher than the melting point of the polymer, after which a film is formed, and the film is impregnated with an electrolyte solvent (the above are gel electrolytes); a method in which a polymer and a non-aqueous electrolytic liquid prepared by dissolving an electrolyte salt in an electrolyte solvent in advance are mixed, after which the mixture is formed into a film by a casting method or a coating method, and the electrolyte solvent is evaporated; and a method in which a polymer and an electrolyte salt are dissolved, mixed, and molded at a temperature equal to or higher than the melting point of the polymer (true polymer electrolytes).

Examples of the polymer used in place of the electrolyte solvent include a polyether-based polymer such as polyethylene oxide (PEO) and polypropylene oxide, which is a homopolymer or a copolymer of epoxy compounds (such as ethylene oxide, propylene oxide, butylene oxide, and allyl glycidyl ether), a methacrylate-based polymer such as polymethyl methacrylate (PMMA), a nitrile-based polymer such as polyacrylonitrile (PAN), a fluorine-based polymer such as polyvinylidene fluoride (PVdF) and polyvinylidene fluoride-hexafluoropropylene, and a copolymer thereof. A single type of the polymer may be used alone, or two or more types thereof may be used in combination.

Additive

The additive includes at least one (hereinafter, referred to as a "specific additive") selected from the group consisting of at least one selected from the group consisting of carbon dioxide ($CO_2$), carbon monoxide (CO), a bicarbonate ion ($HCO_3^-$), and a carbonate ion ($CO_3^{2-}$) (hereinafter, $CO_2$ and the like are collectively referred to as "carbonate species"), an unsaturated cyclic carbonate-based compound, a compound represented by General Formula (4):
[Formula 4]

(4): $MPO_cF_d$

(M: alkali metal element, c: $1 \le c \le 3$, d: $1 \le d \le 3$)

(hereinafter, referred to as a "fluorophosphate compound (4)"), and a phosphorus atom-containing compound represented by General Formula (5):
[Formula 5]

(5): $[-P(=O)(OR^1)O-]_n$

(hereinafter, referred to as a "phosphorus atom-containing compound (5)"). That is, the non-aqueous electrolyte secondary battery according to the present embodiment includes, as one constituent material, a non-aqueous electrolytic liquid containing, as an essential component and as an additive, any one of a carbonate species such as $CO_2$, an unsaturated cyclic carbonate-based compound, a fluorophosphate compound (4), and a phosphorus atom-containing compound (5), in addition to the sulfonylimide compound (1) and the specific chain carbonate-based solvent. In this manner, by further using a specific additive in the non-aqueous electrolytic liquid containing the sulfonylimide compound (1) and the specific carbonate-based solvent, self-discharge of the battery attributed to the sulfonylimide compound (1) (particularly, $LiN(FSO_2)_2$) is suppressed, and storage characteristics are improved, even when a negative electrode containing a low-crystallinity graphite (hereinafter, referred to as a "first graphite") is used.

Note that the specific additive may include only one or more types of carbonate species such as $CO_2$, may include only one or more types of the unsaturated cyclic carbonate-based compound, may include only one or more types of the fluorophosphate compound (4), may include only one or more types of the phosphorus atom-containing compound (5), or may include a combination thereof (a plurality of these specific additives may be used in combination).

At Least One of $CO_2$, CO, $HCO_3^-$, and $CO_3^{2-}$ (Carbonate Species)

The use of a carbonate species such as $CO_2$ as an additive means that a predetermined amount or more (for example, 20 ppm by mass or more) of the carbonate species is dissolved in the non-aqueous electrolytic liquid containing the sulfonylimide compound (1). In other words, a carbonate species is dissolved as an additive in the non-aqueous electrolytic liquid according to the present embodiment. When the non-aqueous electrolytic liquid according to the present embodiment contains a specific additive other than the carbonate species, the carbonate species need not be dissolved in the non-aqueous electrolytic liquid.

In the present description, the dissolution of carbonate species in the non-aqueous electrolytic liquid containing the sulfonylimide compound (1) means that the carbonate species is intentionally dissolved in the non-aqueous electrolytic liquid, but does not exclude the dissolution of, for example, a carbonate species contained in a raw material of the non-aqueous electrolytic liquid such as an electrolyte solvent, or a carbonate species inevitably dissolved in the non-aqueous electrolytic liquid in a normal process for producing a non-aqueous electrolytic liquid or secondary battery. In other words, the total dissolved amount of the carbonate species, which will be described later, may include a carbonate species in the raw material or an inevitably dissolved carbonate species, together with the intentionally dissolved carbonate species.

Note that the form of the carbonate species dissolved in the non-aqueous electrolytic liquid is not particularly limited, and the carbonate species may be present in the form of at least one of $CO_2$, CO, $HCO_3^-$, and $CO_3^{2-}$, and may be present in a single form or a plurality of forms.

From the viewpoint of suppressing self-discharge of the battery, as a proportion of the electrolytic liquid, a total dissolved amount of the carbonate species in the non-aqueous electrolytic liquid is, for example, 20 ppm by mass or more, preferably 50 ppm by mass or more, more preferably 100 ppm by mass or more, still more preferably 150 ppm by mass or more, further preferably 200 ppm by mass or more, still further preferably 250 ppm by mass or more, and particularly preferably 500 ppm by mass or more. An upper limit of the total dissolved amount is not particularly limited and is, for example, equal to or less than a saturation concentration at 25°C. The total dissolved amount can be measured by a method described in the Examples section below, such as, for example, gas chromatography.

In the present description, the total dissolved amount of the carbonate species in the non-aqueous electrolytic liquid is defined as:

· in the process of preparing the non-aqueous electrolytic liquid, the total dissolved amount of the carbonate species in the electrolytic liquid after (immediately after) the preparation of the electrolytic liquid, or after the passage of an aging period (for example, one week) for stabilizing the dissolved amount of the carbonate species as necessary, or

· in the process of manufacturing a secondary battery, the total dissolved amount of the carbonate species in the electrolytic liquid extracted from the battery in a nitrogen atmosphere, for example, after aging of the battery. Examples of aging include processes and conditions described in Examples section below.

(I) After injection, partial charging is performed, and then a high-temperature treatment (storage) is performed at 30°C or higher for a period of at least 6 hours and up to 28 days. After degassing and resealing, charge and discharge are performed to confirm that there are no defects in initial performance. Then, depth of charge is maintained at 50% for one week to confirm that there are no defects due to self-discharge.

(II) is the same as (I) with the exception that the high temperature treatment is not performed after partial charging.

(III) is the same as (I) with the exception that degassing is not performed after the high temperature treatment.

Examples of a method for dissolving the carbonate species in the non-aqueous electrolytic liquid containing the sulfonylimide compound (1) include: (A) a method for dissolving the carbonate species in the non-aqueous electrolytic liquid in the process of preparing the non-aqueous electrolytic liquid; and (B) a method for dissolving the carbonate species in the non-aqueous electrolytic liquid in the process of manufacturing the secondary battery.

In other words, the method (A) of dissolving the carbonate species in the non-aqueous electrolytic liquid in the process of preparing the non-aqueous electrolytic liquid is a method of using a non-aqueous electrolytic liquid that contains the sulfonylimide compound (1) and in which a predetermined amount or more of the carbonate species is dissolved in advance (hereinafter, the non-aqueous electrolytic liquid thereof is also referred to as an "electrolytic liquid with a dissolved carbonate species"), and injecting the electrolytic liquid into a secondary battery. Examples of the method for dissolving the carbonate species in the non-aqueous electrolytic liquid (dissolving) include a method for bringing a carbonate species-containing gas into contact with the non-aqueous electrolytic liquid (liquid contacting), a method for blowing a carbonate species-containing gas into the non-aqueous electrolytic liquid (bubbling), a method for stirring the non-aqueous electrolytic liquid in a carbonate species-containing gas atmosphere (stirring), a method for bringing a high-pressure carbonate species-containing gas into contact with the non-aqueous electrolytic liquid (method for pressurizing a carbonate species-containing gas into the non-aqueous electrolytic liquid, pressurizing), and a method for adding, to the non-aqueous electrolytic liquid, a substance that generates a carbonate species-containing gas (adding). Examples of

the substance that generates a carbonate species-containing gas include bicarbonate, carbonate, and dry ice. Moreover, since the carbonate species can be dissolved in an electrolyte solvent generally used for a non-aqueous electrolytic liquid, the non-aqueous electrolytic liquid may be prepared by dissolving the sulfonylimide compound (1) in an electrolyte solvent in which the carbonate species has been dissolved in advance. The carbonate species can be dissolved in the electrolyte solvent by the same method as described above. An example of another method is a method (substitution process) in which a previously prepared non-aqueous electrolytic liquid is added in a sealed container so as to be about 1/10 of the volume of the container, the container is brought into a substantially vacuum state and then filled with a carbonate species, and this operation is repeated a plurality of times to substitute the air in the container with the carbonate species, and finally the container is sealed and stored at a low temperature for several days. The dissolving process may include at least one of the above-described processes, and a plurality of processes may be combined. The dissolving process preferably includes at least one of pressurizing, liquid contacting, bubbling, and substitution, more preferably includes at least one of pressurizing, liquid contacting, and bubbling, and still more preferably includes pressurizing and substitution (or a combination of pressurizing and substitution).

In addition, in the method (A), the secondary battery may be assembled in a $CO_2$ atmosphere or an atmosphere containing $CO_2$ from the viewpoint of controlling the total dissolved amount of the carbonate species in the non-aqueous electrolytic liquid to a constant amount. Specifically, injecting the non-aqueous electrolytic liquid with a pre-dissolved carbonate species into the battery and a process after the injection may be performed in a $CO_2$ atmosphere or in an atmosphere containing $CO_2$. In addition, after the injection of the electrolytic liquid, the battery may be exposed to a high-pressure $CO_2$ atmosphere.

The electrolytic liquid with a dissolved carbonate species used in the method (A) is obtained by a method for producing the non-aqueous electrolytic liquid according to the present embodiment. This production method includes a dissolving process including at least one of the above processes in order to dissolve a predetermined amount or more of the carbonate species in the non-aqueous electrolytic liquid containing the sulfonylimide compound (1).

Examples of the method (B) for dissolving a carbonate species in the non-aqueous electrolytic liquid in the process of manufacturing a secondary battery include a method in which the secondary battery is assembled in a $CO_2$ atmosphere and the non-aqueous electrolytic liquid is injected into the battery (specifically, a method in which the inside of a battery package sealed on three sides is brought into a substantially vacuum state and then filled with $CO_2$, and then the non-aqueous electrolytic liquid is injected from the one unsealed side, and the battery is sealed at normal pressure); and a method in which the non-aqueous electrolytic liquid is injected into the secondary battery, after which air in the battery is replaced with $CO_2$. As the method for replacing the air in the battery with $CO_2$, the same method as the method for replacing the air in the container with $CO_2$ can be used. Specifically, the air in the package is replaced with $CO_2$ by repeating a plurality of times an operation in which the interior of the package injected with the non-aqueous electrolytic liquid is brought into a substantially vacuum state and then filled with $CO_2$.

The total dissolved amount of the carbonate species in the non-aqueous electrolytic liquid changes depending on a temperature of the non-aqueous electrolytic liquid, and therefore it is preferable to control the temperature at a constant level in the process of preparing the non-aqueous electrolytic liquid and/or the process of manufacturing the secondary battery.

Unsaturated Cyclic Carbonate-Based Compound

Use of an unsaturated cyclic carbonate-based compound as an additive means that a predetermined amount or more of the unsaturated cyclic carbonate-based compound is contained in the non-aqueous electrolytic liquid containing the sulfonylimide compound (1). **In** other words, the non-aqueous electrolytic liquid according to the present embodiment contains an unsaturated cyclic carbonate-based compound as an additive. The unsaturated cyclic carbonate-based compound may be added to the non-aqueous electrolytic liquid or may be added in the process of preparing the non-aqueous electrolytic liquid. Note that when the non-aqueous electrolytic liquid contains a specific additive other than the unsaturated cyclic carbonate-based compound, the non-aqueous electrolytic liquid need not contain the unsaturated cyclic carbonate-based compound.

Examples of the unsaturated cyclic carbonate-based compound include vinylene carbonate (VC), methylvinylene carbonate, ethylvinylene carbonate, 2-vinyl ethylene carbonate, and phenyl ethylene carbonate. A single type of the unsaturated cyclic carbonate-based compound may be used alone, or two or more types thereof may be used in combination. Among the unsaturated cyclic carbonate-based compounds, VC is preferred.

Fluorophosphate Compound (4)

Use of a fluorophosphate compound (4) as an additive means that a predetermined amount or more of the fluorophosphate compound (4) is contained in the non-aqueous electrolytic liquid containing the sulfonylimide compound (1). In other words, the non-aqueous electrolytic liquid according to the present embodiment contains the fluorophosphate

compound (4) as an additive. The fluorophosphate compound (4) may be added to the non-aqueous electrolytic liquid, or may be added in the process of preparing the non-aqueous electrolytic liquid. Note that when the non-aqueous electrolytic liquid contains a specific additive other than the fluorophosphate compound (4), the compound (4) need not be contained.

In General Formula (4), examples of the alkali metal element represented by M include lithium, sodium, potassium, rubidium, and cesium. Of these, lithium is preferred.

Examples of the fluorophosphate compound (4) include lithium monofluorophosphate ($Li_2PO_3F$) and lithium difluorophosphate ($LiPO_2F_2$). A single type of the fluorophosphate compound (4) may be used alone, or two or more types thereof may be used in combination. Among the fluorophosphate compound (4), $Li_2PO_3F$ and $LiPO_2F_2$ (including at least one selected from the group consisting of $Li_2PO_3F$ and $LiPO_2F_2$) are preferable, and $LiPO_2F_2$ is more preferable.

Phosphorus Atom-Containing Compound (5)

Use of a phosphorus atom-containing compound (5) as an additive means that a predetermined amount or more of the phosphorus atom-containing compound (5) is contained in the non-aqueous electrolytic liquid containing the sulfonylimide compound (1). In other words, the non-aqueous electrolytic liquid according to the present embodiment contains the phosphorus atom-containing compound (5) as an additive. The phosphorus atom-containing compound (5) may be added to the non-aqueous electrolytic liquid, or may be added in the process of preparing the non-aqueous electrolytic liquid. Note that when the non-aqueous electrolytic liquid contains a specific additive other than the phosphorus atom-containing compound (5), the compound (5) need not be contained.

In General Formula (5): $[-P(=O)(OR^1)O-]_n$, $R^1$ represents an alkyl group having 1 to 6 carbon atoms (which may have a substituent), a fluoroalkyl group having 1 to 6 carbon atoms (which may have a substituent), an aryl group (which may have a substituent), a silyl group (which may have a substituent), an alkali metal atom, an onium salt, or a hydrogen atom Among $R^1$, a linear alkyl group having 1 to 6 carbon atoms (which may have a substituent), a trifluoroalkyl group having 1 to 6 carbon atoms (which may have a substituent), a trialkylsilyl group having 1 to 6 carbon atoms (which may have a substituent), and a silyl group in which an alkyl group having 1 to 6 carbon atoms (which may have a substituent) and two alkyl groups having 1 to 6 carbon atoms (which may have a substituent) different from each other in details such as the number of carbon atoms and structure (chain, cyclic or the like) are bonded to each other are preferable; a linear alkyl group having 1 to 3 carbon atoms (which may have a substituent), a trifluoroalkyl group having 1 to 3 carbon atoms (which may have a substituent, a trialkylsilyl group having 1 to 4 carbon atoms (which may have a substituent, and a silyl group in which an alkyl group having 1 to 4 carbon atoms (which may have a substituent and two alkyl groups having 1 to 6 carbon atoms (which may have a substituent different from each other in details such as the number of carbon atoms and structure (chain, cyclic or the like) are bonded to each other are more preferable; an ethyl group, a trifluoroethyl group, a trimethylsilyl group, a triethylsilyl group, a triisopropylsilyl group, a (tertiary (tert-)butyl) dimethylsilyl group, and a (tert-butyl)diphenylsilyl group are even more preferable; and a trimethylsilyl group is particularly preferable. In the present description, the trialkylsilyl group having 1 to 6 carbon atoms or having 1 to 4 carbon atoms refers to a silyl group to which three alkyl groups having from 1 to 6 carbon atoms or from 1 to 4 carbon atoms are bonded. In addition, in General Formula (5), $R^1$ may be a trialkoxysilyl group ($-Si(-OR)_3$) in which three alkyl groups (R) having from 1 to 6 or from 1 to 4 carbon atoms are bonded to a silyl group through an oxygen atom. Examples of the trialkoxysilyl group include a trimethoxysilyl group, a triethoxysilyl group, a triisopropoxysilyl group, a (tert-butoxy)dimethoxysilyl group, and a (tert-butoxy)diphenoxysilyl group. Note that the three alkyl groups or alkoxy groups may be the same or different. In General Formula (5), $R^1$ is preferably the same group.

In General Formula (5), n represents an integer of 2 or more (degree of polymerization). For example, n may be from 2 to 200, or the like.

Specific examples of the phosphorus atom-containing compound (5) include ethyl polyphosphate ($R^1$ represents an ethyl group in General Formula (5)), trimethylsilyl polyphosphate ($R^1$ represents a trimethylsilyl group (TMS) in General Formula (5)), triethylsilyl polyphosphate ($R^1$ represents a triethylsilyl group (TES) in General Formula (5)), and (triisopropylsilyl)polyphosphate ($R^1$ represents a triisopropylsilyl group (TIPS) in General Formula (5)), [(tert-butyl)dimethylsilyl] polyphosphate ($R^1$ represents a (tert-butyl)dimethylsilyl group (TBDMS) in General Formula (5)), [(tert-butyl)diphenylsilyl] polyphosphate ($R^1$ represents a (tert-butyl)diphenylsilyl group (TBDPS) in General Formula (5)), trimethoxysilyl polyphosphate ($R^1$ represents a trimethoxysilyl group in General Formula (5)), triethoxysilyl polyphosphate ($R^1$ represents a triethoxysilyl group in General Formula (5)), (triisopropoxysilyl)polyphosphate ($R^1$ represents a triisopropoxysilyl group in General Formula (5)), [(tert-butoxy)dimethoxysilyl] polyphosphate ($R^1$ represents a (tert-butoxy)dimethoxysilyl group in General Formula (5)), and [(tert-butoxy)diphenoxysilyl] polyphosphate ($R^1$ represents a (tert-butoxy)diphenoxysilyl group in General Formula (5)). A single type of the phosphorus atom-containing compound (5) may be used alone, or two or more types thereof may be used in combination. Among the phosphorus atom-containing compounds (5), trimethylsilyl polyphosphate is preferable.

Structure of trimethylsilyl polyphosphate, such as a chain structure represented by the following Structural Formula (5-1), a cyclic structure represented by the following Structural Formula (5-2), and a branched structure

represented by the following Structural Formula (5-3) can be analyzed, for example, by measuring through $^{31}$P-NMR or the like the presence or absence of a peak indicating a bond between a phosphorus atom and a group in the vicinity of the phosphorus atom and the abundance ratio thereof (integral ratio of each peak). Examples of the measurement conditions of $^{31}$P-NMR include the conditions described in the Examples section below.

[Formula 6]

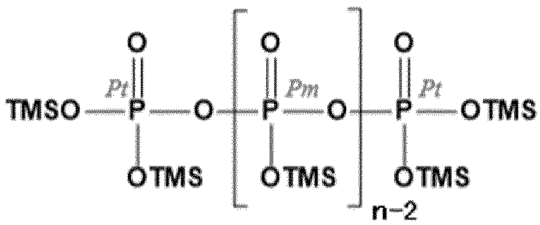

(5－1)

[Formula 7]

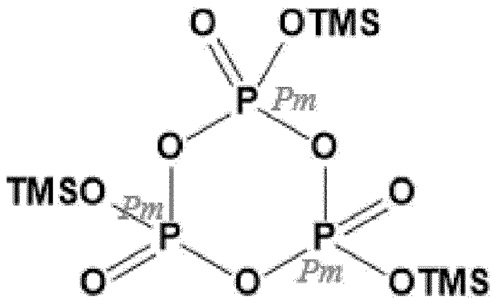

(5－2)

[Formula 8]

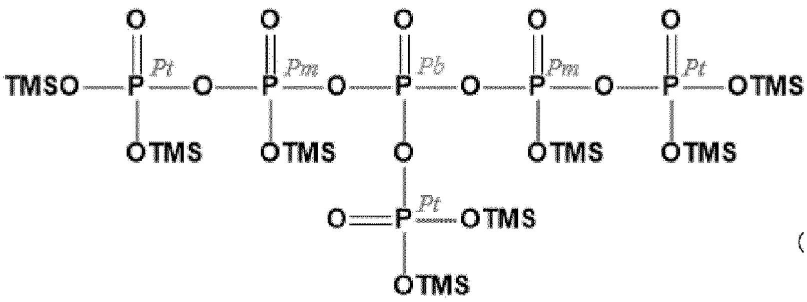

(5－3)

In Structural Formulas (5-1) to (5-3), "TMS" represents a trimethylsilyl group, n indicates a degree of polymerization, and Pt, Pm, and Pb each represent a peak of a phosphorus atom. Pt indicates the peak of a phosphorus atom at a terminal, a side chain, or the like, and more specifically, a phosphorus atom having one group in which a hydrogen atom of a hydroxy group is substituted with another adjacent phosphorus atom (hereinafter, the group thereof may also be referred to as a "-O-P group"). Pm indicates the peak of a phosphorus atom having a linear structure, and more specifically, a phosphorus atom having two "-O-P groups". Pb indicates the peak of a phosphorus atom having a branched structure, and more specifically, a phosphorus atom having three "-O-P groups". In this manner, details such as the presence or absence of a branched structure, the abundance ratio thereof, and the degree of polymerization n are estimated from the presence or absence of Pt, Pm, and Pb and the integral ratio thereof. For example, in a case in which trimethylsilyl polyphosphate entirely has a chain structure represented by Structural Formula (5-1) (a structure having no Pb peak), when the integral value of the Pt region is 1, the degree of polymerization n thereof is expressed by 2 × {(integral value of Pt) + (integral value of Pm)} ≈ 2 × {1 + (integral value of Pm)}. Moreover, when the integral value of the region of Pt is 2, the degree of polymerization n is expressed by (integral value of Pt) + (integral value of Pm) ≈ 2 + (integral value of Pm). For example, in the case of trimethylsilyl polyphosphate used in examples described below, the degree of polymerization n is calculated to be 4.87 on average. When trimethylsilyl polyphosphate having a cyclic structure represented by Structural Formula (5-2) is included, the degree of polymerization n is estimated to be smaller than that described above. Trimethylsilyl polyphosphate having a Pb peak, which indicates a branched structure represented by Structural Formula (5-3) is preferably

included from the viewpoints of suppressing self-discharge of the battery and further improving battery performance. In this case, the integral ratio of Pt, Pm and Pb is preferably Pt : Pm : Pb = from 1.0 : 3.0 : 0.2 to 1.0 : 9.0 : 3.0, and more preferably Pt : Pm : Pb = from 1.0 : 6.0 : 0.7 to 1.0 : 7.0 : 1.2.

Among the specific additives, from the viewpoint of suppressing self-discharge of the battery and elution of Ni from the positive electrode, a carbonate species and a phosphorus atom-containing compound (5) are preferable, a phosphorus atom-containing compound (5) is more preferable, trimethylsilyl polyphosphate, ethyl polyphosphate, (triisopropylsilyl) polyphosphate, and [(tert-butyl)dimethylsilyl] polyphosphate are further preferable, and trimethylsilyl polyphosphate including a branched structure represented by Structural Formula (5-3) is particularly preferable.

From the viewpoint of suppressing self-discharge of the battery, in relation to 100 mass% of the total amount of the components contained in the non-aqueous electrolytic liquid, the specific additive other than the carbonate species is used in a range of preferably from 0.1 mass% to 10 mass%, more preferably from 0.2 mass% to 8 mass%, still more preferably from 0.3 mass% to 5 mass%, further preferably from 0.3 mass% to 3 mass%, and still further preferably from 0.3 mass% to 1 mass%.

Other Additives

As described above, the non-aqueous electrolytic liquid may only contain the specific additive, but may contain another additive (an additive other than the specific additive). The other additive is an additive for the purpose of improving various characteristics of a lithium-ion secondary battery. The other additive may be added to the non-aqueous electrolytic liquid or may be added in the process of preparing the non-aqueous electrolytic liquid. Examples of the other additive include a carboxylic anhydride such as succinic anhydride, glutaric anhydride, maleic anhydride, citraconic anhydride, glutaconic anhydride, itaconic anhydride, diglycolic anhydride, cyclohexane dicarboxylic anhydride, cyclopentane tetracarboxylic dianhydride, and phenylsuccinic anhydride; a sulfur-containing compound such as ethylene sulfite, 1,3-propanesultone, 1,4-butanesultone, methyl methanesulfonate, busulfan, sulfolane, sulfolene, dimethyl sulfone, tetramethylthiuram monosulfide, and trimethylene glycol sulfate ester; a nitrogen-containing compound such as 1-methyl-2-pyrrolidinone, 1-methyl-2-piperidone, 3-methyl-2-oxazolidinone, 1,3-dimethyl-2-imidazolidinone, and N-methylsuccinimide; a saturated hydrocarbon compound such as heptane, octane, and cycloheptane; a carbonate compound such as fluoroethylene carbonate (FEC), trifluoropropylene carbonate, phenylethylene carbonate, and erythritan carbonate; sulfamic acid (amidosulfuric acid, $H_3NSO_3$); a sulfamate salt (such as an alkali metal salt such as a lithium salt, a sodium salt, and a potassium salt; an alkaline earth metal salt such as a calcium salt, a strontium salt, and a barium salt; another metal salt such as a manganese salt, a copper salt, a zinc salt, an iron salt, a cobalt salt, and a nickel salt; an ammonium salt; and a guanidine salt); and a fluoro oxalate compound such as a lithium salt having an oxalic acid skeleton, such as lithium bis(oxalato)borate (LiBOB), lithium difluoro(oxalato)borate (LiDFOB), lithium difluoro(oxalato)phosphate (LiDFOP), lithium tetrafluoro(oxalato)phosphate (LiTFOP), lithium difluorobis(oxalato)phosphate (LiDFBOP), and lithium tris(oxalato)phosphate. A single type of the other additive may be used alone, or two or more types thereof may be used in combination. The amount of the other additive is equivalent to the amount of the specific additive described above.

As described above, the non-aqueous electrolytic liquid according to the present embodiment is composed of the sulfonylimide compound (1), the specific carbonate-based solvent, the specific additive, and, if necessary, various components such as the other electrolyte salt, the other electrolyte solvent, and the other additives. The non-aqueous electrolytic liquid can be prepared, for example, by mixing these components at a predetermined composition (mass) ratio.

Positive Electrode

The positive electrode includes a positive electrode current collector and a positive electrode composite material layer, and the positive electrode composite material layer is formed on the positive electrode current collector and is usually formed into a sheet shape.

Examples of metal used for the positive electrode current collector include iron, copper, aluminum, nickel, stainless steel, titanium, tantalum, gold, and platinum. Of these, aluminum is preferred. The positive electrode current collector has no particularly limited shape or dimensions.

The positive electrode composite material layer is formed from a positive electrode composite material (positive electrode composition). The positive electrode composite material contains a positive electrode active material, a conductive auxiliary, a binder, a solvent or the like for dispersing these components, and the like.

In the secondary battery according to the present embodiment, the positive electrode (positive electrode composite material) can suitably use, for example, a ternary positive electrode active material such as $LiNi_{1/3}Co_{1/3}Mn_{1/3}O_2$(NCM111), $LiNi_{0.5}Co_{0.2}Mn_{0.3}O_2$(NCM523), $LiNi_{0.6}Co_{0.2}Mn_{0.2}O_2$(NCM622), or $LiNi_{0.8}Co_{0.1}Mn_{0.1}O_2$(NCM811); or an iron phosphate-based positive electrode active material having an olivine structure such as $LiFePO_4$, or $LiFe_{0.995}Mn_{0.005}PO_4$. A single type of the positive electrode active material may be used alone, or two or more types thereof may be used in combination.

Among the ternary positive electrode active materials, a high Ni-containing ternary positive electrode active material represented by the general formula (6):
[Formula 9]

(6): $Li_vNi_xCo_yMn_zO_{2+w}$

$(0.2 \leq v \leq 1.2, 0.5 \leq x \leq 0.9, 0 < y \leq 0.3, 0 < z \leq 0.4, x + y + z = 1, -0.2 \leq w \leq 0.2$

(where v represents a molar ratio of Li, x represent a molar ratio of Ni, y represents a molar ratio of Co, z represents a molar ratio of Mn, and w (2 + w) represents a molar ratio of O))
(which hereinafter is referred to as the "high Ni-containing ternary positive electrode active material (6)") is preferable.

In the high Ni-containing ternary positive electrode active material (6), a content proportion of Ni ("x" in General Formula (6)) with respect to a total amount of 100% (100 mol%) of the transition metals on a molar basis is 50% or more ($0.5 \leq x$), preferably 55% or more ($0.55 \leq x$), and more preferably 70% or more ($0.7 \leq x$). An upper limit of the content proportion is 90% or less ($x \leq 0.9$), preferably less than 85% ($x < 0.85$), and more preferably 80% or less ($x \leq 0.8$). Content proportions of the components ("v", "y", "z", and "w" (2 + w) in General Formula (6)) other than Ni in the high Ni-containing ternary positive electrode active material (6) may be appropriately adjusted within the ranges of the molar ratios described above.

A single type of the high Ni-containing ternary positive electrode active material (6) may be used alone, or two or more types thereof may be used in combination. As the high Ni-containing ternary positive electrode active material (6), a commercially available product may be used, or a product obtained by synthesis through a known method may be used. Specific examples of the high Ni-containing ternary positive electrode active material (6) include NCM523, NCM622, and NCM811.

The positive electrode preferably contains at least one of the ternary positive electrode active material and the iron phosphate-based positive electrode active material described above, but may contain another positive electrode active material. Any other positive electrode active material may be used as long as the positive electrode active material can occlude and release lithium ions, and for example, any positive electrode active material used in a known secondary battery (lithium-ion secondary battery) can be used.

Examples of the positive electrode active material used in a lithium-ion secondary battery include lithium cobaltate; lithium nickelate; lithium manganate; a transition metal oxide such as a ternary oxide other than the ternary positive electrode active material described above, examples thereof including a transition metal oxide represented by $LiNi_{1-v-w}Co_vAl_wO_2$ ($0 \leq v \leq 1, 0 \leq w \leq 1$); a compound having an olivine structure such as $LiAPO_4A$ (A = Mn, Ni, Co); a solid-solution material in which a plurality of transition metals are incorporated (a solid solution of electrochemically inactive layered $Li_2MnO_3$ and electrochemically active layered $LiMO_2$(M = transition metal such as Co or Ni)); $LiCo_xMn_{1-x}O_2$ ($0 \leq x \leq 1$); $LiNi_xMn_{1-x}O_2$ ($0 \leq x \leq 1$); a compound having a fluoro-olivine structure such as $Li_2APO_4F$ (A = Fe, Mn, Ni, Co); and sulfur. A single type of the positive electrode active material may be used alone, or two or more types thereof may be used in combination.

From the viewpoint of improving the output characteristics and electrical characteristics of the secondary battery, in relation to 100 mass% of a total amount of the components included in the positive electrode composite material, a content of the positive electrode active material (a total content when a plurality of positive electrode active materials are included) is preferably 75 mass% or more, more preferably 85 mass% or more, and even more preferably 90 mass% or more, and is preferably 99 mass% or less, more preferably 98 mass% or less, and even more preferably 95 mass% or less.

A conductive auxiliary is used to improve the output of a lithium-ion secondary battery. Electrically conductive carbon is primarily used as the conductive auxiliary. Examples of the electrically conductive carbon include carbon black, fibrous carbon, and graphite. A single type of the conductive auxiliary may be used alone, or two or more types thereof may be used in combination. Among the conductive auxiliaries, carbon black is preferable. Examples of carbon black include Ketjen black and acetylene black. From the viewpoint of improving the output characteristics and electrical characteristics of the lithium-ion secondary battery, a content percentage of the conductive auxiliary in the non-volatile portion of the positive electrode composite material is preferably from 1 to 20 mass%, and more preferably from 1.5 to 10 mass%.

Examples of the binder include a fluorine-based resin such as polyvinylidene fluoride and polytetrafluoroethylene; a synthetic rubber such as styrene-butadiene rubber and nitrile-butadiene rubber; a polyamide-based resin such as polyamideimide; a polyolefin-based resin such as polyethylene and polypropylene; a poly(meth)acrylic-based resin; a polyacrylic acid; and a cellulose-based resin such as carboxymethyl cellulose. A single type of the binder may be used alone, or two or more types thereof may be used in combination. Moreover, the binder may be in a state of being dissolved in the solvent at the time of use or in a state of being dispersed in the solvent at the time of use.

Examples of the solvent include N-methylpyrrolidone, dimethylformamide, dimethylacetamide, methyl ethyl ketone, tetrahydrofuran, acetonitrile, acetone, ethanol, ethyl acetate, and water. A single type of the solvent may be used alone, or two or more types thereof may be used in combination. The amount of the solvent is not particularly limited and

may be appropriately determined according to a production method and a material to be used.

As necessary, the positive electrode composite material may contain, as another component, for example, a polymer, such as a non-fluorine-based polymer such as a (meth)acrylic polymer, a nitrile-based polymer, or a diene-based polymer, and a fluorine-based polymer such as polytetrafluoroethylene; an emulsifier such as an anionic emulsifier, a nonionic emulsifier, or a cationic emulsifier; a dispersant such as a polymer dispersant such as a styrene-maleic acid copolymer or polyvinylpyrrolidone; a thickener such as carboxymethyl cellulose, hydroxyethyl cellulose, polyvinyl alcohol, polyacrylic acid (salt), or an alkali-soluble (meth)acrylic acid - (meth)acrylate copolymer; and a preservative. A content percentage of the other component in the non-volatile portion of the positive electrode composite material is preferably from 0 to 15 mass%, and more preferably from 0 to 10 mass%.

The positive electrode composite material can be prepared by, for example, mixing the positive electrode active material, the conductive auxiliary, the binder, the solvent, and another component as necessary, and dispersing the mixture using a bead mill, a ball mill, a stirring mixer, or the like.

A method for forming the positive electrode (a coating method) is not particularly limited, and examples thereof include: (1) a method of applying (and drying) the positive electrode composite material on the positive electrode current collector through a commonly used application method (for example, a doctor blade method), (2) a method of immersing the positive electrode current collector in the positive electrode composite material (and then drying), (3) a method of bonding (for example, bonding through a conductive adhesive) a sheet formed of the positive electrode composite material onto the positive electrode current collector and pressing (and drying), (4) a method of applying or casting onto the positive electrode current collector a positive electrode composite material to which a liquid lubricant has been added, forming into a desired shape, and then removing the liquid lubricant (and then also uniaxially or multiaxially stretching), and (5) a method of forming a slurry from the positive electrode composite material (or a solid component forming the positive electrode composite material layer) using an electrolytic liquid, transferring the slurry to a current collector (positive electrode current collector) in a semi-solid state, and using the transferred slurry as an electrode (positive electrode) without drying.

Note that as necessary, the positive electrode composite material layer may be dried or pressurized (pressed) after being formed or coated (applied).

Negative Electrode

The negative electrode includes a negative electrode current collector and a negative electrode composite material layer, and the negative electrode composite material layer is formed on the negative electrode current collector and is usually molded into a sheet shape.

Examples of metal used for the negative electrode current collector include iron, copper, aluminum, nickel, stainless steel (SUS), titanium, tantalum, gold, and platinum. Of these, copper is preferred. The negative electrode current collector has no particularly limited shape and dimensions.

The negative electrode composite material layer is formed from a negative electrode composite material (negative electrode composition). The negative electrode composite material contains a negative electrode active material, a conductive auxiliary, a binder, a solvent for dispersing these components, and the like.

Here, the non-aqueous electrolyte secondary battery according to the present embodiment is configured with a negative electrode that contains, as a negative electrode active material, a first graphite (graphite) having a peak area ratio (D/G ratio) of a D-band and a G-band analyzed by Raman spectroscopy of greater than 0.7 and/or a full-width at half-maximum of the G-band analyzed by Raman spectroscopy of greater than 28 $cm^{-1}$, and contains a second graphite having a D/G ratio of 0.7 or less and/or a full-width at half-maximum of the G-band of 28 $cm^{-1}$ or less at an amount of from 0 mass% to 10 mass% per 100 mass% of a total amount of the first graphite and the second graphite. That is, the negative electrode (negative electrode active material) may contain only the "first graphite", or may contain a mixed graphite including the "first graphite" and the "second graphite" with a content proportion of the second graphite being 10 mass% or less. In this manner, the non-aqueous electrolyte secondary battery according to the present embodiment includes, as one constituent material, a negative electrode containing, as an essential component, the low-crystallinity "first graphite". Through the combined use of the negative electrode active material (negative electrode) that includes the "first graphite" and the predetermined amount or less of the "second graphite", and the non-aqueous electrolytic liquid in which a carbonate species is intentionally dissolved and/or a non-aqueous electrolytic liquid containing the specific additive other than the carbonate species, self-discharge of the battery attributed to the sulfonylimide compound (1) (particularly $LiN(FSO_2)_2$) is suppressed, and storage characteristics are improved.

When the content proportion of the high-crystallinity "second graphite" is increased, the effect of suppressing self-discharge of the battery is achieved, while the cycle capacity retention rate (charge/discharge cycle characteristics) decreases. The reason for this is considered to be that when a negative electrode containing the high-crystallinity "second graphite" is used, the battery capacity is reduced, and as a result, the battery life is also reduced. It is also considered that in a battery that uses the negative electrode containing the "second graphite", since the chargeable capacity is low, depth of

charge of the graphite as a whole is deep, and capacity deterioration during the charge/discharge cycle is significant. On the other hand, in the non-aqueous electrolyte secondary battery according to the present embodiment, when the negative electrode (negative electrode active material) is a mixed graphite containing the "first graphite" and the "second graphite", the content proportion of the "second graphite" is stipulated to be 10 mass% or less in relation to 100 mass% of the total amount of the "first graphite" and the "second graphite", and thereby a decrease in the cycle capacity retention rate is suppressed, and the charge/discharge cycle characteristics are improved.

From the viewpoint of improving the battery capacity, when the negative electrode active material is mixed graphite, the content proportion of the "second graphite" in relation to 100 mass% of the total amount of the "first graphite" and the "second graphite" is 10 mass% or less, preferably 8 mass% or less, and more preferably 5 mass% or less. A lower limit of the content proportion of the "second graphite" is 0 mass% or more, and from the viewpoint of suppressing self-discharge of the battery, the lower limit thereof is preferably 1 mass% or more, more preferably 2 mass% or more, and still more preferably 3 mass% or more.

In a Raman spectrum measured with Raman light excited by a laser having a wavelength of 532 nm, the "peak area ratio (D/G ratio) of a D-band and a G-band analyzed by Raman spectroscopy" refers to a ratio (ID/IG, D-band/G-band area ratio) of the area of a peak intensity ID near 1350 $cm^{-1}$, which is attributed to a defect in the graphite structure contained in the carbon material to the area of a peak intensity IG near 1580 $cm^{-1}$, which is attributed to the graphite structure (crystallinity) contained in the carbon material. Note that these peaks may appear at positions shifted by about $\pm 10$ $cm^{-1}$. The D/G ratio of the "first graphite" is greater than 0.7, and an upper limit thereof is not particularly limited, but may be, for example, 2 or less. A "first graphite" having a D/G ratio within the above range refers to graphite having low crystallinity and a relatively large number of irregularities and defects in the graphite structure. On the other hand, the D/G ratio of the "second graphite" is 0.7 or less, and a lower limit thereof is not particularly limited, but may be, for example, 0.05 or greater. A "second graphite" in which the D/G ratio is within the above range refers to graphite having high crystallinity and relatively few irregularities and defects in the graphite structure. Examples of a method for measuring the Raman spectrum include a method described in Examples section below.

In the Raman spectrum measured with Raman light excited by a laser having a wavelength of 532 nm, the "full-width at half-maximum of the G-band analyzed by Raman spectroscopy" refers to the full-width at half-maximum of the peak intensity IG near 1580 $cm^{-1}$, which is attributed to the graphite structure in the carbon material. The full-width at half-maximum of the G-band is related to the crystallinity of the graphite structure or the amount of irregularities and defects therein. The full-width at half-maximum of the G-band of the "first graphite" is greater than 28 $cm^{-1}$, and an upper limit thereof is not particularly limited, but may be, for example, 50 $cm^{-1}$ or less. The "first graphite" for which the full-width at half-maximum of the G-band is within the above range refers to graphite having low crystallinity and a relatively large number of irregularities and defects in the graphite structure. Meanwhile, when the full-width at half-maximum of the G-band of the "second graphite" is 28 $cm^{-1}$ or less, the above-described effect is exhibited, but from the viewpoint of improving the effect thereof, the full-width at half-maximum of the G-band is preferably 23 $cm^{-1}$. Moreover, a lower limit thereof is not particularly limited, but may be, for example, 10 $cm^{-1}$ or greater. The "second graphite" having a full-width at half-maximum of the G-band that is within the above range refers to graphite having high crystallinity and relatively few irregularities and defects in the graphite structure.

Examples of the "first graphite" include natural graphite such as O-MAC available from Osaka Gas Chemicals Co., Ltd. and SMG available from Hitachi Chemical Co., Ltd. The "first graphite" is a carbon material that is relatively inexpensive than the "second graphite". A single type of the "first graphite" may be used alone, or two or more types thereof may be used in combination.

Examples of the "second graphite" include graphite such as MAGE available from Hitachi Chemical Co., Ltd., and SFG15 and SLP50 available from Imerys Graphite & Carbon Switzerland SA. A single type of the "second graphite" may be used alone, or two or more types thereof may be used in combination.

Specific examples of mixed graphite include those containing SMG and SFG15 at a compositional (mass) ratio of from 99:1 to 90:10.

As described above, the negative electrode active material may only contain the "first graphite" and a predetermined amount or less of the "second graphite", but may also contain another negative electrode active material. As the other negative electrode active material, a known negative electrode active material or the like used in various batteries (for example, a lithium secondary battery) or the like can be used, and any material may be used as long as it can occlude and release lithium ions. Examples of the other negative electrode active material that can be used include a carbon material such as a mesophase sintered body made of coal or petroleum pitch, and non-graphitizable carbon; a Si-based negative electrode material such as Si, Si alloys, and SiO; an Sn-based negative electrode material such as Sn alloys; lithium metal; and a lithium alloys such as a lithium-aluminum alloy. A single type of the other negative electrode active material may be used alone, or two or more types thereof may be used in combination.

The negative electrode composite material may further contain a conductive auxiliary (conductive substance), a binder, a solvent, and the like. As the conductive auxiliary, the binder, the solvent, and the like, the same components as those described above can be used. In addition, the usage ratio and the like are also the same as described above.

As a method for producing the negative electrode, a method similar to the method for producing the positive electrode may be employed.

Separator

The non-aqueous electrolyte secondary battery according to the present embodiment may be provided with a separator. The separator is disposed so as to separate the positive electrode and the negative electrode. The separator is not particularly limited, and any known separator can be used in the present disclosure. Specific examples of the separator include a porous sheet (for example, a polyolefin-based microporous separator or a cellulose-based separator) made of a polymer that can absorb and retain an electrolytic liquid (non-aqueous electrolytic liquid), a non-woven fabric separator, and a porous metal body.

Examples of a material of the porous sheet include polyethylene, polypropylene, and a laminate having a three layer structure of polypropylene/polyethylene/polypropylene.

Examples of a material of the non-woven fabric separator include cotton, rayon, acetate, nylon, polyester, polypropylene, polyethylene, polyimide, aramid, and glass, and the material exemplified above may be used alone or in a combination of two or more according to required mechanical strength and the like.

Battery Packaging Material

A battery element provided with a positive electrode, a negative electrode, and a non-aqueous electrolytic liquid (and further a separator) is usually housed in a battery packaging material in order to protect the battery element from external impact, environmental deterioration, and the like during use of the battery. The material of the battery packaging material is not particularly limited, and any known packaging material can be used.

As necessary, expanded metal, an overcurrent-preventing element such as a fuse or a positive temperature coefficient (PTC) element, a lead plate, or the like may be added into the battery packaging material to prevent an increase in internal pressure of the battery and over-charge and over-discharge.

The battery (lithium-ion secondary battery or the like) has no particularly limited shape, and any shape known as the shape of a battery (lithium-ion secondary battery or the like) can be used, such as a cylindrical shape, a square shape, a laminated shape, a coin shape, and a large shape. Moreover, when the battery is used as a high-voltage power supply (from several 10 V to several 100 V) to be mounted in an electric vehicle, a hybrid electric vehicle, or the like, a battery module configured by connecting individual batteries in series can be used.

A rated charging voltage of the secondary battery (such as a lithium-ion secondary battery) is not particularly limited, but when the secondary battery includes a positive electrode containing, as a primary component, the above-described ternary positive electrode active material, the rated charging voltage may be, for example, 3.6 V or higher, preferably 4.0 V or higher, more preferably 4.1 V or higher, and even more preferably 4.2 V or higher. As the rated charging voltage becomes higher, the energy density can be increased. However, from the viewpoint of safety or the like, the rated charging voltage may be, for example, 4.6 V or less (for example, 4.5 V or less).

Method for Producing Non-Aqueous Electrolyte Secondary Battery

The non-aqueous electrolyte secondary battery according to the present embodiment can be easily produced by, for example, stacking a positive electrode and a negative electrode (with a separator interposed therebetween as necessary), placing the obtained stacked body into a battery packaging material, injecting a non-aqueous electrolytic liquid into the battery packaging material, and sealing the battery packaging material.

As described above, in the non-aqueous electrolyte secondary battery containing the sulfonylimide compound (1) according to the present embodiment, a specific non-aqueous electrolytic liquid containing a specific carbonate-based solvent and a specific additive is used in combination with a specific negative electrode containing, as a negative electrode active material, the "first graphite" alone or a mixed graphite of the "first graphite" and the "second graphite" with the content proportion of the "second graphite" being 10 mass% or less in relation to 100 mass% of the total amount of the "first graphite" and the "second graphite". As a result, in the non-aqueous electrolyte secondary battery, an effect of improving self-discharge (storage characteristics) through the combination of the specific negative electrode and the specific additive is obtained, and further, a synergistic effect of improving the charge/discharge cycle characteristics is obtained due to the stipulation of the content proportion of the "second graphite" in the mixed graphite.

Examples

Hereinafter, the present disclosure will be described on the basis of examples. It should be noted that the present disclosure is not limited to examples described below, and the examples described below can be modified and changed on

the basis of the gist of the present disclosure, and such modifications and changes are not excluded from the scope of the present disclosure.

Raman Spectroscopic Measurements of Graphite

The various graphites described in Table 1 below were subjected to Raman spectroscopy conditions described below using the JASCO NRS-3100 (available from JASCO Corporation). In each of the obtained Raman spectra (D/G charts, see FIGS. 1 to 5), an area of peak intensity IG in the vicinity of 1580 $cm^{-1}$ was defined as a "peak area of the G-band", an area of peak intensity ID in the vicinity of 1350 $cm^{-1}$ was defined as a "peak area of the D-band", and a ratio of these areas was calculated as a "peak area ratio (D/G ratio) of the D-band and G-band". Moreover, a full-width at half-maximum of the peak intensity IG in the vicinity of 1580 $cm^{-1}$ was calculated as a "full-width at half-maximum of the G-band". The results thereof are shown in Table 1.

Raman Spectrometry Conditions

· Laser wavelength: 532 nm
· Exposure time: 5 seconds × 4 times
· Center wavenumber: 2250 $cm^{-1}$
· Slit: φ0.2 mm
· Dimmer: OD1 (laser output 0.7 mW)
· Objective lens: 20×
· Baseline correction (linear correction from 400 $cm^{-1}$ to 2400 $cm^{-1}$)

[Table 1]

| Graphite | | Peak Position ($cm^{-1}$) | | Area Ratio D/G ratio | Full-Width at Half- Maximum of G-band ($cm^{-1}$) |
|---|---|---|---|---|---|
| Product Name | Type | G-band | D-band | | |
| MAGE | Artificial graphite | 1581 | 1351 | 0.09 | 20 |
| SFG15 | Artificial graphite | 1582 | 1352 | 0.22 | 21 |
| SLP50 | Artificial graphite | 1584 | 1351 | 0.64 | 25 |
| O-MAC | Natural graphite | 1582 | 1351 | 0.75 | 31 |
| SMG | Natural graphite | 1587 | 1348 | 1.1 | 45 |

Example 1 Series

Production of Negative Electrode

Production Example 1

An aqueous slurry was prepared with a compositional ratio (mass ratio, same hereinafter) of MAGE (available from Hitachi Chemical Co., Ltd.) : carbon fiber (VGCF, available from Showa Denko K.K.) : carboxymethyl cellulose (CMC, commercially available product) : styrene-butadiene rubber (SBR, commercially available product) = 100 : 2 : 1 : 1. The aqueous slurry was coated (coating weight: 9.8 $mg/cm^2$) onto one side of a copper foil, dried, and then roll-pressed, and thereby a negative electrode 1-1 was produced.

Production Example 2

An aqueous slurry having a compositional ratio of SFG15 (available from Imerys Graphite & Carbon Switzerland SA) : VGCF : CMC : SBR = 100 : 2 : 1 : 1 was prepared, the slurry was coated (coating weight: 9.8 $mg/cm^2$) onto one side of a copper foil, dried, and then roll-pressed, and thereby a negative electrode 1-2 was produced.

Production Example 3

An aqueous slurry having a compositional ratio of SLP50 (available from Imerys Graphite & Carbon Switzerland SA) : VGCF : CMC : SBR = 100 : 2 : 1 : 1 was prepared, the slurry was coated (coating weight: 9.8 mg/$cm^2$) onto one side of a copper foil, dried, and then roll-pressed, and thereby a negative electrode 1-3 was produced.

Production Example 4

An aqueous slurry having a compositional ratio of O-MAC (available from Osaka Gas Chemicals Co., Ltd.) : VGCF : CMC : SBR = 100 : 2 : 1 : 1 was prepared, the slurry was coated (coating weight: 9.8 mg/$cm^2$) onto one side of a copper foil, dried, and then roll-pressed, and thereby a negative electrode 1-4 was produced.

Production Example 5

An aqueous slurry having a compositional ratio of SMG (available from Hitachi Chemical Co., Ltd.) : VGCF : CMC : SBR = 100 : 2 : 1 : 1 was prepared, the slurry was coated (coating weight: 9.8 mg/$cm^2$) onto one side of a copper foil, dried, and then roll-pressed, and thereby a negative electrode 1-5 was produced.

Production Example 6

A mixed graphite was obtained by mixing SMG and SFG15 at a mass ratio of 95:5, after which an aqueous slurry having a compositional ratio of the mixed graphite : VGCF : CMC : SBR = 100 : 2 : 1 : 1 was prepared, the slurry was coated (coating weight: 9.8 mg/$cm^2$) onto one side of a copper foil, dried, and then roll-pressed, and thereby a negative electrode 1-6 was produced.

Production Example 7

A mixed graphite was obtained by mixing SMG and SFG15 at a mass ratio of 90: 10, after which an aqueous slurry having a compositional ratio of the mixed graphite : VGCF : CMC : SBR = 100 : 2 : 1 : 1 was prepared, the slurry was coated (coating weight: 9.8 mg/$cm^2$) onto one side of a copper foil, dried, and then roll-pressed, and thereby a negative electrode 1-7 was produced.

Production Example 8

A mixed graphite was obtained by mixing SMG and SFG15 at a mass ratio of 85:15, after which an aqueous slurry having a compositional ratio of the mixed graphite : VGCF : CMC : SBR = 100 : 2 : 1 : 1 was prepared, the slurry was coated (coating weight: 9.8 mg/$cm^2$) onto one side of a copper foil, dried, and then roll-pressed, and thereby a negative electrode 1-8 was produced.

Production Example 9

A mixed graphite was obtained by mixing O-MAC and SFG15 at a mass ratio of 85:15, after which an aqueous slurry having a compositional ratio of the mixed graphite : VGCF : CMC : SBR = 100 : 2 : 1 : 1 was prepared, the slurry was coated (coating weight: 9.8 mg/$cm^2$) onto one side of a copper foil, dried, and then roll-pressed, and thereby a negative electrode 1-9 was produced.

Production of Laminated Battery (Examples 1-1 to 1-10 and Comparative Examples 1-1 to 1-7)

· A ternary positive electrode ($LiNi_{1/3}Co_{1/3}Mn_{1/3}O_2$ (NCM111), available from Umicore N.V), acetylene black (Denka Black, available from Denka Co., Ltd.), graphite (SP270, available from Nippon Graphite Industries Co., Ltd.), and polyvinylidene fluoride (PVdF) (L #7208, available from Kureha Corporation) were weighed at a compositional (mass) ratio of 100 : 3 : 3 : 3 and dispersed in N-methyl-2-pyrrolidone (NMP) to prepare a slurry. One side of an aluminum foil was coated (coating weight: 19.8 mg/$cm^2$) with the prepared slurry, dried, and then roll-pressed, and thereby a positive electrode was produced. The obtained positive electrode was cut into an effective area of 12 $cm^2$.

· The negative electrode obtained in each production example was cut to an effective area of 13.44 $cm^2$. The types of the negative electrodes that were used are shown in Table 2 below.

An electrolyte salt having a mixed salt composition containing LiFSI (available from Nippon Shokubai Co., Ltd.) and $LiPF_6$ (available from Stella Chemifa Corp.) was dissolved in a mixed solvent (available from Kishida Chemical Co., Ltd.) having a composition of ethylene carbonate (EC) : ethyl methyl carbonate (EMC) = 3 : 7 (volume ratio) as the electrolyte solvent such that the concentration of the electrolyte salt was 0.6 mol/L in each case. The additive shown in Table 2 was added to the solution obtained above at the content or dissolved amount shown in Table 2, the mixture was stirred for 1 day, and thereby a non-aqueous electrolytic liquid (hereinafter, also simply referred to as an "electrolytic liquid") was prepared.

· A polarity-inducing lead was ultrasonically welded to the positive and negative electrodes that were cut, the positive and negative electrodes were oriented so as to be opposing with a polyethylene (PE) separator having a thickness of 25 μm interposed therebetween, and three sides were sealed with a laminate package, and thereby a cell was prepared. An amount of 700 μL of an electrolytic liquid shown in Table 2 was injected from the one unsealed side of the obtained cell, and thereby a 30 mAh laminated battery (lithium-ion battery) was produced as a non-aqueous electrolyte secondary battery.

· After injection of the electrolytic liquid, the battery was charged at a constant current of 6 mA for 3 hours, and then degassed by cleaving one piece and once again vacuum-sealing. The cell after degassing was stored at 25°C for 48 hours, and then charged and discharged under conditioning conditions 1 described below, and thereby a battery for evaluation was completed.

Conditioning Conditions 1

First cycle charging: charge at a constant current of 3 mA and a constant voltage of 4.2 V, cut-off at 0.3 mA ⇒ discharging: discharge at 6 mA, cut-off at 2.75 V.

Second cycle charging: charge at a constant current of 6 mA and a constant voltage of 4.2 V, cut-off at 0.6 mA ⇒ discharging: discharge at 6 mA, cut-off at 2.75 V.

Third cycle charging: charge at a constant current of 6 mA and a constant voltage of 4.2 V, cut-off at 0.6 mA ⇒ discharging: discharge at 30 mA, cut-off at 2.75 V.

Evaluation of Laminated Battery

Measurement of Self-Discharge Capacity (OCV) (Evaluation of Storage Characteristics)

The batteries for evaluation were charged to a fully charged state through a constant current of 30 mA and a constant voltage of 4.2 V with a cut-off of 0.6 mA. The open circuit voltage (OCV) of each battery after being fully charged was measured (initial OCV). After measurements, the batteries were stored at 60°C for 28 days, and then stored at 25°C for 4 hours, after which the OCV was measured (OCV after 28 days at 60°C (post-storage)). Using these measured values, a difference (ΔV) between the initial OCV and the post-storage OCV was calculated as the self-discharge. The results are presented in Table 2. The higher the post-storage OCV, that is, the smaller the self-discharge (ΔV), the more the self-discharge of the battery is suppressed (the more excellent the storage characteristics).

Measurement of 45°C 300 Cycle Capacity Retention Rate (Evaluation of Charge/Discharge Cycle Characteristics)

Each battery for evaluation was subjected to a cycle test of a total of 300 cycles at 45°C under charging and discharging conditions (cycle conditions) described below. The capacity retention rate after 300 cycles was determined on the basis of the following Equation (1).

$$\text{Capacity retention rate (\%)} = ((\text{1 C capacity at 300th cycle})/(\text{1 C capacity at first cycle})) \times 100 \qquad \text{[Equation 1]}$$

The results are presented in Table 2. The higher the cycle capacity retention rate, the more excellent the charge/discharge cycle characteristics.

Cycle Conditions

· Charging: charge at a constant current of 1 C (30 mA) and a constant voltage of 4.2 V, cut-off at 0.02 C (0.6 mA), rest for 10 minutes.

· Discharging: discharge at a constant current (CC) of 1 C (30 mA), cut-off at 2.75 V, rest for 10 minutes.

[Table 2]

| Example 1 Series | Electrolytic Liquid | Additive | Negative Electrode | Active Material | Area Ratio D/G ratio | Full-Width at Half-Maximum of G-band ($cm^{-1}$) | OCV (V) | | | 45°C 300 Cycle Capacity Retention Rate |
|---|---|---|---|---|---|---|---|---|---|---|
| | | | | | | | Initial (before storage) | After 28 days at 60°C (after storage) | Self-discharge (ΔV) | |
| Example 1-1 | (Electrolyte salt composition) 0.6 M LiFSI + 0.6 M $LiPF_6$ (Electrolyte solvent composition) EC/EMC = 3/7 | VC 0.5% | Negative electrode 1-4 | O-MAC | 0.75 | 31 | 4.1955 | 4.0686 | 0.1269 | 88.7 |
| Example 1-2 | | $LiPO_2F_2$ 0.5% | Negative electrode 1-4 | O-MAC | 0.75 | 31 | 4.1955 | 4.0562 | 0.1393 | 87.4 |
| Example 1-3 | | $CO_2$ 100 ppm | Negative electrode 1-4 | O-MAC | 0.75 | 31 | 4.1955 | 4.0684 | 0.1271 | 88.6 |
| Example 1-4 | | VC 0.5% | Negative electrode 1-5 | SMG | 1.10 | 45 | 4.1955 | 4.0677 | 0.1278 | 89.2 |
| Example 1-5 | | $LiPO_2F_2$ 0.5% | Negative electrode 1-5 | SMG | 1.10 | 45 | 4.1955 | 4.0544 | 0.1411 | 88.3 |
| Example 1-6 | | $CO_2$ 100 ppm | Negative electrode 1-5 | SMG | 1.10 | 45 | 4.1955 | 4.0672 | 0.1283 | 89.3 |
| Example 1-7 | | VC 0.5% | Negative electrode 1-6 | SMG/SFG 15 =95/5 | 1.10/0.22 | 45/21 | 4.1995 | 4.0681 | 0.1314 | 88.5 |
| Example 1-8 | | $LiPO_2F_2$ 0.5% | Negative electrode 1-6 | SMG/SFG15 =95/5 | 1.10/0.22 | 45/21 | 4.1995 | 4.0582 | 0.1413 | 88.1 |
| Example 1-9 | | VC 0.5% | Negative electrode 1-7 | SMG/SFG15 =90/10 | 1.10/0.22 | 45/21 | 4.1995 | 4.0684 | 0.1311 | 87.5 |
| Example 1-10 | | $CO_2$ 100 ppm | Negative electrode 1-7 | SMG/SFG15 =90/10 | 1.10/0.22 | 45/21 | 4.1995 | 4.0685 | 0.131 | 87.7 |
| Comparative Example 1-1 | | - | Negative electrode 1-4 | O-MAC | 0.75 | 31 | 4.1955 | 4.0192 | 0.1763 | 85.9 |
| Comparative Example 1-2 | | - | Negative electrode 1-5 | SMG | 1.10 | 45 | 4.1955 | 3.9534 | 0.2421 | 86.2 |
| Comparative Example 1-3 | | - | Negative electrode 1-1 | MAGE | 0.09 | 20 | 4.1955 | 4.0337 | 0.1618 | 85.3 |

(continued)

| Example 1 Series | Electrolytic Liquid | Additive | Negative Electrode | Active Material | Area Ratio D/G ratio | Full-Width at Half-Maximum of G-band ($cm^{-1}$) | OCV (V) | | | 45°C 300 Cycle Capacity Retention Rate |
|---|---|---|---|---|---|---|---|---|---|---|
| | | | | | | | Initial (before storage) | After 28 days at 60°C (after storage) | Self-discharge (ΔV) | |
| Comparative Example 1-4 | | - | Negative electrode 1-2 | SFG15 | 0.22 | 21 | 4.1955 | 4.0323 | 0.1632 | 81.4 |
| Comparative Example 1-5 | | - | Negative electrode 1-3 | SLP50 | 0.64 | 25 | 4.1955 | 4.0223 | 0.1732 | 82.3 |
| Comparative Example 1-6 | | VC 0.5% | Negative electrode 1-8 | SMG/SFG15 =85/15 | 1.10/0.22 | 45/21 | 4.1955 | 4.0688 | 0.1267 | 84.7 |
| Comparative Example 1-7 | | $CO_2$ 100 ppm | Negative electrode 1-8 | SMG/SFG 15 =85/15 | 1.10/0.22 | 45/21 | 4.1955 | 4.069 | 0.1265 | 84.9 |

Discussion of Example 1 Series

. The batteries (Comparative Examples 1-1 and 1-2) that used a relatively inexpensive graphite (O-MAC or SMG, "first graphite") alone, the graphite thereof having low crystallinity and a D/G ratio (D/G band area ratio) of greater than 0.7 and/or a full-width at half-maximum of the G-band of greater than 28 $cm^{-1}$, were confirmed to have a lower OCV after storage at 60°C for 28 days, an increase in self-discharge (ΔV), and greater self-discharge from a fully charged state than the batteries (Comparative Examples 1-3 to 1-5) that used a relatively expensive graphite (MAGE, SFG15, or SLP50, "second graphite") alone, the graphite thereof having high crystallinity and a D/G ratio of 0.7 or less and/or a full-width at half-maximum of the G-band of 28 $cm^{-1}$ or less.

· The batteries (Examples 1-1 to 1-6) that used the "first graphite" in combination with the specific electrolytic liquid to which VC or $LiPO_2F_2$ was added as the specific additive or the specific electrolytic liquid containing dissolved $CO_2$ were confirmed to have a higher OCV after storage and less self-discharge than the batteries (Comparative Examples 1-3 to 1-5) that used the "second graphite" in combination with a known electrolytic liquid not containing the specific additive. Accordingly, it was confirmed that self-discharge, which has been a problem of batteries that use a known electrolytic liquid containing LiFSI in combination with a relatively inexpensive low-crystallinity "first graphite" having a D/G ratio that exceeds 0.7 and/or a full-width at half-maximum of the G-band that is greater than 28 $cm^{-1}$, can be suppressed.

· The detailed mechanism of the reason why the self-discharge of a battery provided with such increases as the D/G ratio and/or the full-width at half-maximum of the G-band of the graphite increases is unclear, but factors such as the selective decomposition of LiFSI on the graphite surface corresponding to the D-band may be considered.

· The reason why the addition and dissolution of VC, $LiPO_2F_2$, or $CO_2$ in a known electrolytic liquid containing LiFSI improves the self-discharge of a battery provided with such electrolytic liquid is considered to be that the additive is decomposed at the negative electrode first, and the decomposition of FSI for forming a coating film is suppressed.

· With regard to the batteries (Comparative Examples 1-6 and 1-7) that used the mixed graphite containing the "first graphite" and the "second graphite" with the content of the "second graphite" being 15 mass% in relation to 100 mass% of the total amount of the "first graphite" and the "second graphite", the batteries thereof also used an electrolytic liquid containing VC or an electrolytic liquid containing dissolved $CO_2$, and thereby while the batteries thereof exhibited a suppression of self-discharge in comparison to the batteries (Examples 1-7 and 1-10) that used the mixed graphite containing 5 mass% or 10 mass% of the "second graphite", the 300 cycle capacity retention rate at 45°C was reduced.

· The reason for this is considered to be that the high-crystallinity "second graphite" having a D/G ratio of 0.7 or less and/or a full-width at half-maximum of the G-band of 28 $cm^{-1}$ or less had a low lithium storage capacity, and thus the storage capacity of the negative electrode decreased as the content of the "second graphite" in the mixed graphites increased, resulting in a decrease in the cycle capacity retention rate.

· On the other hand, it was confirmed that when the content of the "second graphite" in the mixed graphite was stipulated to be 10 mass% or less, a battery using an electrolytic liquid containing VC or $LiPO_2F_2$ or an electrolytic liquid containing dissolved $CO_2$ exhibited not only a suppression of self-discharge, but also a suppression of a decrease in the cycle capacity retention rate, that is, both the storage characteristics and the charge/discharge cycle characteristics of the battery were improved.

Example 2 Series

Production of Negative Electrode

Negative electrodes 2-1 to 2-9 were produced with the same compositions as those of the negative electrodes 1-1 to 1-9 by the same method as in Production Examples 1 to 9 with the exception that the coating weight was changed to 10.8 $mg/cm^2$.

Production of Laminated Battery (Examples 2-1 to 2-6 and Comparative Examples 2-1 to 2-4)

· Positive electrodes were produced in the same manner as in the Example 1 series with the exception that the positive electrode active material was changed to $LiNi_{0.8}Co_{0.1}Mn_{0.1}O_2$ (NCM811) available from Beijing Dangbian Corporation.

· Non-aqueous electrolytic liquids were prepared in the same manner as in the Example 1 series with the exception

that the additives were changed to the types and contents or dissolved amounts thereof shown in Table 3.

· The obtained positive and negative electrodes were used to produce 30 mAh laminated batteries in the same manner as in the Example 1 series, the batteries were charged and discharged under the above-described conditioning conditions 1, and batteries for evaluation were thereby completed. The types of the negative electrode and electrolytic liquid that were used are described in Table 3 below.

Evaluation of Laminated Battery

The batteries for evaluation were evaluated in the same manner as in the Example 1 series.

[Table 3]

| Example 2 Series | Electrolytic Liquid | Additive | Negative Electrode | Active Material | Area Ratio D/G ratio | Full-Width at Half-Maximum of G-band ($cm^{-1}$) | OCV (V) | | | 45°C 300 Cycle Capacity Retention Rate |
|---|---|---|---|---|---|---|---|---|---|---|
| | | | | | | | Initial (Before storage) | 60°C After 28 days (After storage) | Self-Discharge (ΔV) | |
| Example 2-1 | (Electrolyte salt composition) 0.6 M LiFSI + 0.6 M $LiPF_6$ (Electrolyte solvent composition) EC/EMC = 3/7 | VC 0.5% | Negative electrode 2-4 | O-MAC | 0.75 | 31 | 4.1955 | 4.0912 | 0.1043 | 89.8 |
| Example 2-2 | | VC 0.01% | Negative electrode 2-4 | O-MAC | 0.75 | 31 | 4.1955 | 4.0902 | 0.1053 | 89.7 |
| Example 2-3 | | $LiPO_2F_2$ 0.5% | Negative electrode 2-4 | O-MAC | 0.75 | 31 | 4.1955 | 4.0907 | 0.1048 | 89.2 |
| Example 2-4 | | $LiPO_2F_2$ 0.05% | Negative electrode 2-4 | O-MAC | 0.75 | 31 | 4.1955 | 4.0902 | 0.1053 | 88.7 |
| Example 2-5 | | $CO_2$ 100 ppm | Negative electrode 2-4 | O-MAC | 0.75 | 31 | 4.1955 | 4.0921 | 0.1034 | 90.1 |
| Example 2-6 | | $CO_2$ 30 ppm | Negative electrode 2-4 | O-MAC | 0.75 | 31 | 4.1955 | 4.0904 | 0.1051 | 88.7 |
| Comparative Example 2-1 | | - | Negative electrode 2-4 | O-MAC | 0.75 | 31 | 4.1955 | 4.0756 | 0.1199 | 85.6 |
| Comparative Example 2-2 | | - | Negative electrode 2-1 | MAGE | 0.09 | 20 | 4.1955 | 4.0898 | 0.1057 | 86.1 |
| Comparative Example 2-3 | | VC 0.5% | Negative electrode 2-9 | O-MAC/SFG15 =85/15 | 0.75 /0.22 | 31/21 | 4.1995 | 4.0922 | 0.1073 | 84.1 |
| Comparative Example 2-4 | | - | Negative electrode 2-9 | O-MAC/SFG15 =85/15 | 0.75 /0.22 | 31/21 | 4.1995 | 4.0761 | 0.1234 | 82.4 |

Discussion of Example 2 Series

- It was confirmed that even when the positive electrode was changed to $LiNi_{0.8}Co_{0.1}Mn_{0.1}O_2$, the batteries (each of the Examples) in which the negative electrode containing the "first graphite" was used in combination with the electrolytic liquid containing VC or $LiPO_2F_2$ or the electrolytic liquid containing dissolved $CO_2$ exhibited a high OCV after storage and could suppress self-discharge.
- In addition, regarding the mixed graphite containing the "first graphite" and the "second graphite", as in the case of the Example 1 series, in the batteries that used a negative electrode containing the mixed graphite that contained the "second graphite" at an amount of 15 mass% in relation to 100 mass% of the total amount of the "first graphite" and the "second graphite", self-discharge was suppressed, but a decrease in the 300 cycle capacity retention rate at 45°C was confirmed.

Example 3 Series

Production of Negative Electrode

Negative electrodes 2-1 to 2-9 were produced with the same compositions as those of the negative electrodes 1-1 to 1-9 by the same method as in Production Examples 1 to 9 with the exception that the coating weight was changed to 8.8 mg/cm$^2$.

Production of Laminated Battery (Examples 3-1 to 3-3 and Comparative Examples 3-1 to 3-4)

- The positive electrode active material was changed to commercially available $LiFePO_4$, and $LiFePO_4$, acetylene black (HS-100), and PVdF (L #7208, available from Kureha Corporation) were weighed at a compositional (mass) ratio of 100:9:6 and dispersed in NMP to prepare a slurry. One side of an aluminum foil was coated (coating weight: 20.20 mg/cm$^2$) with the prepared slurry, dried, and roll-pressed, and thereby a positive electrode was prepared.
- Non-aqueous electrolytic liquids were prepared in the same manner as in the Example 1 series with the exception that the additives were changed to the types and contents or dissolved amounts thereof shown in Table 4.
- The obtained positive and negative electrodes were used to produce 25 mAh laminated batteries in the same manner as in the Example 1 series. The types of the negative electrode and electrolytic liquid that were used are described in Table 4 below.
- After injection of the electrolytic liquid, each battery was charged at a constant current of 5 mA for 3 hours, and then degassed by cleaving one piece and once again vacuum-sealing. After degassing, the batteries were stored at 25°C for 48 hours, and then charged and discharged under conditioning conditions 2 described below, and thereby batteries for evaluation were completed.

Conditioning Conditions 2

First cycle charging: charge at a constant current of 2.5 mA and a constant voltage of 3.6 V, cut-off at 0.25 mA ⇒ discharging: discharge at 5 mA, cutoff at 2.0 V.

Second cycle charging: charge at a constant current of 2.5 mA and a constant voltage of 3.6 V, cut-off at 0.5 mA ⇒ discharging: discharge at 5 mA, cut-off at 2.0 V.

Third cycle charging: charge at a constant current of 2.5 mA and a constant voltage of 3.6 V, cut-off at 0.5 mA ⇒ discharging: discharge at 25 mA, cut-off at 2.0 V.

Evaluation of Laminated Battery

The batteries for evaluation were charged and discharged under conditions described below (25°C), and the initial capacity of each was confirmed.

(Conditions) Charging: charge at a constant current of 25 mA and a constant voltage of 3.6 V, cut-off at 0.5 mA ⇒ discharging: cut-off at 2.5 mA and 2.0 V.

Measurement of Self-Discharge Capacity (OCV) (Evaluation of Storage Characteristics)

The OCV was measured in the same manner as in the Example 1 series with the exception that batteries whose initial capacities had been measured were charged to a fully charged state at a constant current of 25 mA and a constant voltage of 3.6V with charging being cut off at 0.5 mA. In addition, batteries for which the OCV was measured after 28 days at 60°C (after storage) were discharged at a constant current of 2.5 mA with discharging being cut off at 2.0 V, and the residual capacity after storage for 28 days at 60°C was then measured. Using the obtained residual capacity and initial capacity, the residual proportion was calculated by the following equation (2).
[Equation 2]

$$(2)\text{: Residual proportion (\%)} = \text{(residual capacity)}/\text{(initial capacity)} \times 100$$

The results are shown in Table 4. A high residual proportion indicates that the self-discharge capacity is small, and that self-discharge is suppressed.

[Table 4]

| Example 3 Series | Electrolytic Liquid | Additive | Negative Electrode | Active Material | Area Ratio D/G ratio | Full-Width at Half-Maximum of G-band ($cm^{-1}$) | OCV (V) | | | 45°C 300 Cycle Capacity Retention Rate | Capacity |
|---|---|---|---|---|---|---|---|---|---|---|---|
| | | | | | | | Initial (before storage) | After 28 days at 60°C (after storage) | Self-discharge (ΔV) | | Residual proportion (%) |
| Example 3-1 | (Electrolyte salt composition) 0.6 M LiFSI + 0.6 M $LiPF_6$ (Electrolyte solvent composition) EC/EMC = 3/7 | VC 0.5% | Negative electrode 3-5 | SMG | 1.10 | 45 | 3.3622 | 3.3236 | 0.0386 | 87.4 | 74.1 |
| Example 3-2 | | $LiPO_2F_2$ 0.5% | Negative electrode 3-5 | SMG | 1.10 | 45 | 3.3622 | 3.321 1 | 0.0411 | 86.8 | 71.7 |
| Example 3-3 | | $CO_2$ 100 ppm | Negative electrode 3-5 | SMG | 1.10 | 45 | 3.3622 | 3.3241 | 0.0381 | 87.5 | 73.6 |
| Comparative Example 3-1 | | - | Negative electrode 3-5 | SMG | 1.10 | 45 | 3.3622 | 3.3174 | 0.0448 | 83.4 | 60.4 |
| Comparative Example 3-2 | | - | Negative electrode 3-1 | MAGE | 0.09 | 20 | 3.3622 | 3.3186 | 0.0436 | 83.3 | 70.4 |
| Comparative Example 3-3 | | VC 0.5% | Negative electrode 3-8 | SMG/SFG 15 =85/15 | 1.10/0.22 | 45/21 | 3.3622 | 3.3244 | 0.0378 | 82.4 | 75.2 |
| Comparative Example 3-4 | | - | Negative electrode 3-8 | SMG/SFGL15 =85/15 | 1.10/0.22 | 45/21 | 3.3622 | 3.3184 | 0.0438 | 80.2 | 60.9 |

Discussion of Example 3 Series

· It was confirmed that even when the positive electrode was changed to $LiFePO_4$, the batteries (each of the Examples) in which the negative electrode containing the "first graphite" was used in combination with the electrolytic liquid containing VC or $LiPO_2F_2$ or with the electrolytic liquid containing dissolved $CO_2$ exhibited a high OCV after storage and could suppress self-discharge.
· Since the discharge voltage of the $LiFePO_4$ positive electrode is flat, the relationship between OCV and self-discharge ($\Delta$V) may not be clear in some cases. Therefore, when the residual proportion during storage was checked, it was confirmed that in each Example, the residual proportion was high, and self-discharge was suppressed.
· In addition, regarding the mixed graphite containing the "first graphite" and the "second graphite", as in the case of the Example 1 series, in the batteries that used a negative electrode containing the mixed graphite that contained the "second graphite" at an amount of 15 mass% in relation to 100 mass% of the total amount of the "first graphite" and the "second graphite", self-discharge was suppressed, but a decrease in the 300 cycle capacity retention rate at 45°C was confirmed.

Example 4 Series

Synthesis and Analysis of Additives

$^{31}$P-NMR Analysis

The reagent trimethylsilyl polyphosphate (hereinafter, also referred to as "PPSE-1") available from Sigma-Aldrich was analyzed by $^{31}$P-NMR, and as illustrated in FIG. 6, two peaks were confirmed including a peak (Pt) appearing at a chemical shift from -28 ppm to -33 ppm and a peak (Pm) appearing at a chemical shift from -35 ppm to -41 ppm. The integral ratio of the two peaks was Pt : Pm = 1.00 : 1.43. Meanwhile, a peak (Pb) appearing at a chemical shift from -41 ppm to -45 ppm was not confirmed. The $^{31}$P-NMR measurements were performed using the JNM-ECA500 available from JEOL, Ltd. with a double sample tube being used as a sample tube, and the chemical shifts were determined with the peak of the phosphorus of $H_3PO_4$ added to one tube considered to be 0 ppm.

Synthesis 1 of Trimethylsilyl Polyphosphate

An amount of 1.553 g of diphosphorus pentoxide was dispersed in 10 mL of methylene chloride, and 1.710 g of hexamethylene disiloxane was slowly added dropwise while stirring, after which the mixture was stirred at room temperature for about one day. Subsequently, the solvent was distilled off to synthesize trimethylsilyl polyphosphate (hereinafter, also referred to as "PPSE-2").

$^{31}$P-NMR Analysis

When the synthesized trimethylsilyl polyphosphate (PPSE-2) was analyzed by $^{31}$P-NMR in the same manner as described above, as illustrated in FIG. 7, three peaks were confirmed including a peak (Pt) appearing at a chemical shift from -28 ppm to - 33 ppm, a peak (Pm) appearing at a chemical shift from -35 ppm to -41 ppm, and a peak (Pb) appearing at a chemical shift from -41 ppm to -45 ppm. The integral ratio of the three peaks was Pt : Pm : Pb = 1.00 : 6.73 : 1.00. From the analysis results, it was presumed that the PPSE-2 was trimethylsilyl polyphosphate containing a large amount of a branched structure (a branched structure represented by Structural Formula (5-3)).

Synthesis 2 of Trimethylsilyl Polyphosphate

An amount of 1.553 g of diphosphorus pentoxide was dispersed in 10 mL of toluene, and 1.710 g of hexamethylene disiloxane was slowly added dropwise while stirring, after which the mixture was stirred at room temperature for about one day. Subsequently, the solvent was distilled off to synthesize trimethylsilyl polyphosphate (hereinafter, also referred to as "PPSE-3").

$^{31}$P-NMR Analysis

When the synthesized trimethylsilyl polyphosphate (PPSE-3) was analyzed by $^{31}$P-NMR in the same manner as described above, as illustrated in FIG. 8, three peaks were confirmed including a peak (Pt) appearing at a chemical shift

from -28 ppm to - 33 ppm, a peak (Pm) appearing at a chemical shift from -35 ppm to -41 ppm, and a peak (Pb) appearing at a chemical shift from -41 ppm to -45 ppm. The integral ratio of the three peaks was Pt : Pm : Pb = 1.00 : 6.51 : 0.81. From the analysis results, it was presumed that the PPSE-3 was trimethylsilyl polyphosphate containing a large amount of a branched structure (a branched structure represented by Structural Formula (5-3)).

Synthesis of Ethyl Polyphosphate

A sample tube was filled with 10 g of diphosphorus pentoxide and, as the solvent, 10 g of chloroform and 20 g and diethyl ether, and the contents were stirred at 900 rpm and 35°C for 3 days. Subsequently, the solvent was distilled off using an evaporator, and vacuum drying was performed for 24 hours, and thereby ethyl polyphosphate (hereinafter, also referred to as "PPE") was synthesized.

$^{31}$P-NMR Analysis

When the synthesized ethyl polyphosphate (PPE) was analyzed by $^{31}$P-NMR in the same manner as described above, three peaks were confirmed including a peak (Pt) appearing at a chemical shift from -12 ppm to -15 ppm, a peak (Pm) appearing at a chemical shift from -25 ppm to -31 ppm, and a peak (Pb) appearing at a chemical shift from -39 ppm to -46 ppm. The integral ratio of the three peaks was Pt : Pm : Pb = 1.00 : 3.59 : 0.42. From the analysis results, it was presumed that the PPE was ethyl polyphosphate containing a large amount of a branched structure (a structure in which TMS is an ethyl group in the branched structure represented by Structural Formula (5-3)).

Synthesis of (Triisopropylsilyl) Polyphosphate

0.53 g of indium(III) bromide was dissolved in 30 mL of tetrahydrofuran, after which 4.75 g of triisopropylsilane was added thereto, and the mixture was stirred and reacted at room temperature for one day. After the reaction, 30 mL of hexane was added to the solution, and the mixture separated into two layers upon standing. The separated upper layer was recovered and then concentrated under reduced pressure, and thereby 4.01 g of hexaisopropyl disiloxane was obtained as a colorless liquid. Subsequently, 1.55 g of phosphorus pentoxide and 1.70 g of the hexaisopropyl disiloxane obtained above were added to 10 mL of dichloromethane, and the mixture was stirred and reacted at 35°C for 3 days. After the reaction, the solution was filtered and then concentrated under reduced pressure, and thereby 2.10 g of (triisopropylsilyl) polyphosphate (hereinafter, also referred to as "PPSE(TIPS)") was synthesized as a viscous liquid.

Synthesis of [(Tert-butyl) Dimethylsilyl Polyphosphate]

[(Tert-butyl) dimethylsilyl] polyphosphate (hereinafter, also referred to as "PPSE(TBDMS)") was synthesized by performing the same procedure as in the synthesis of PPSE(TIPS) with the exception that the triisopropylsilane used in the synthesis of PPSE(TIPS) was changed to tert-butyldimethylsilane.

Production of Laminated Battery (Examples 4-1 to 4-9 and Comparative Examples 4-1 and 4-2)

- Positive electrodes were produced in the same manner as in the Example 1 series with the exception that the positive electrode active material was changed to $LiNi_{0.8}Co_{0.1}Mn_{0.1}O_2$ (NCM811) available from Beijing Dangbian Corporation, and the coating weight was changed to 15.7 mg/cm$^2$.
- The negative electrode 2-1 or 2-5 produced in the Example 2 series was used.
- Non-aqueous electrolytic liquids were prepared in the same manner as in the Example 1 series with the exception that the additives were changed to the types and the contents or dissolved amounts thereof shown in Tables 5 and 6.
- The obtained positive and negative electrodes were used to produce 30 mAh laminated batteries in the same manner as in the Example 1 series. The types of the negative electrode and electrolytic liquid that were used are described in Tables 5 and 6 below.
- After injection of the electrolytic liquid, the batteries were vacuum-sealed and subjected to charging at a constant current of 3 mA for 3 hours at 25°C. Subsequently, the batteries were allowed to stand at room temperature for 2 days, and then degassed by cleaving one piece of the laminate package and then once again vacuum-sealing. After degassing, the batteries were charged and discharged under conditioning conditions 3 described below, and thereby batteries for evaluation were completed.

Conditioning Conditions 3

First cycle charging: charge at a constant current of 3 mA and a constant voltage of 4.2 V, cut-off at 0.3 mA ⇒ discharging: discharge at 6 mA, cut-off at 2.75 V.
Second cycle charging: charge at a constant current of 15 mA and a constant voltage of 4.2 V, cut-off at 0.6 mA ⇒ discharging: discharge at 6 mA, cut-off at 2.75 V.
Third cycle charging: charge at a constant current of 15 mA and a constant voltage of 4.2 V, cut-off at 0.6 mA ⇒ discharging: discharge at 30 mA, cut-off at 2.75 V.
Fourth cycle charging: charge at a constant current of 15 mA and a constant voltage of 4.2 V, cut-off at 0.6 mA ⇒ discharging: discharge at 60 mA, cut-off at 2.75 V.

Evaluation of Laminated Battery

Measurement of Self-Discharge Capacity (OCV) (Evaluation of Storage Characteristics)

The conditioned batteries were charged to a fully charged state at a constant current of 30 mA (1 C) and a constant voltage of 4.2 V with a cut-off of 0.6 mA using a charge/discharge tester. The OCV was measured in the same manner as in the Example 1 series with the exception that after being fully charged, the batteries were each stored at 60°C for 28 days or at 80°C for 14 days, and then left standing (stored) at 25°C for 6 hours or longer. The results are shown in Tables 5 and 6.

Detected Amount of Transition Metal

After the OCV measurement, the batteries were discharged and then disassembled, and the removed PE separators and the negative electrodes were washed with 50 mL of EMC and then dried. Subsequently, the negative electrode composite material (negative electrode active material) detached from the current collector (copper-foil) was immersed in 1 g of nitric acid for 24 hours and dissolved. Next, the PE separator was also immersed in the nitric acid for 24 hours. The obtained nitric acid solution was filtered and diluted with ultrapure water to prepare a test sample. The amount of nickel (Ni) (per battery (cell)) in the test sample was detected by analyzing the measurement sample with an ICP emission spectrometer (available from Shimadzu Corporation). The results are shown in Tables 5 and 6.

[Table 5]

| Example 4 Series (1) | Electrolytic Liquid | Additive | Negative Electrode | Active Material | Area Ratio D/G ratio | Full-Width at Half-Maximum of G-band ($cm^{-1}$) | OCV (V) | | | Detected Ni Amount (μg/cell) |
|---|---|---|---|---|---|---|---|---|---|---|
| | | | | | | | Initial (before storage) | After 28 days at 60°C (after storage) | Self-discharge (ΔV) | |
| Example 4-1 | (Electrolyte salt composition) 0.6 M LiFSI + 0.6 M $LiPF_6$ (Electrolyte solvent composition) EC/EMC = 3/7 | PPSE-1 0.5% | Negative electrode 2-5 | O-MAC | 0.75 | 31 | 4.1955 | 4.0907 | 0.1048 | 16.3 |
| Example 4-2 | | PPSE-2 0.5% | | | | | 4.1955 | 4.0913 | 0.1042 | 15.1 |
| Example 4-3 | | PPSE-3 0.5% | | | | | 4.1955 | 4.0914 | 0.1041 | 14.9 |
| Example 4-4 | | PPE 0.5% | | | | | 4.1955 | 4.0902 | 0.1053 | 15.6 |
| Example 4-5 | | PPSE(TIPS) 0.5% | | | | | 4.1955 | 4.0911 | 0.1044 | 15.8 |
| Example 4-6 | | PPSE(TBDMS) 0.5% | | | | | 4.1955 | 4.0910 | 0.1045 | 16.0 |
| Example 4-7 | | VC 0.5% | | | | | 4.1995 | 4.0912 | 0.1083 | 17.2 |
| Example 4-8 | | $LiPO_2F_2$ 0.5% | | | | | 4.1995 | 4.0907 | 0.1088 | 17.8 |
| Example 4-9 | | $CO_2$ 1000 ppm | | | | | 4.1995 | 4.0931 | 0.1064 | 17.6 |
| Comparative Example 4-1 | | - | Negative electrode 2-5 | O-MAC | 0.75 | 31 | 4.1995 | 4.0756 | 0.1239 | 27.2 |
| Comparative Example 4-2 | | - | Negative electrode 2-1 | MAGE | 0.09 | 20 | 4.1955 | 4.0898 | 0.1057 | 21.2 |

[Table 6]

| Example 4 Series (2) | Electrolytic Liquid | Additive | Negative Electrode | Active Material | Area Ratio D/G ratio | Full-Width at Half-Maximum of G-band ($cm^{-1}$) | OCV (V) | | | Detected Ni Amount (μg/cell) |
|---|---|---|---|---|---|---|---|---|---|---|
| | | | | | | | Initial (before storage) | After 14 days at 80°C (after storage) | Self-discharge (ΔV) | |
| Example 4-1 | (Electrolyte salt composition) 0.6 M LiFSI + 0.6 M $LiPF_6$ (Electrolyte solvent composition) EC/EMC = 3/7 | PPSE-1 0.5% | Negative electrode 2-5 | O-MAC | 0.75 | 31 | 4.1955 | 4.0177 | 0.1778 | 54.3 |
| Example 4-2 | | PPSE-2 0.5% | | | | | 4.1955 | 4.0191 | 0.1764 | 50.6 |
| Example 4-3 | | PPSE-3 0.5% | | | | | 4.1955 | 4.0188 | 0.1767 | 50.2 |
| Example 4-4 | | PPE 0.5% | | | | | 4.1955 | 4.0166 | 0.1789 | 55.7 |
| Example 4-5 | | PPSE(TIPS) 0.5% | | | | | 4.1955 | 4.0173 | 0.1782 | 53.8 |
| Example 4-6 | | PPSE(TBDMS) 0.5% | | | | | 4.1955 | 4.0168 | 0.1787 | 56.2 |
| Example 4-7 | | VC 0.5% | | | | | 4.1995 | 4.0161 | 0.1834 | 58.8 |
| Example 4-8 | | $LiPO_2F_2$ 0.5% | | | | | 4.1995 | 4.0155 | 0.1840 | 60.2 |
| Example 4-9 | | $CO_2$ 1000 ppm | | | | | 4.1995 | 4.0152 | 0.1843 | 58.4 |
| Comparative Example 4-1 | | - | Negative electrode 2-5 | O-MAC | 0.75 | 31 | 4.1995 | 4.0071 | 0.1924 | 89.8 |
| Comparative Example 4-2 | | - | Negative electrode 2-1 | MAGE | 0.09 | 20 | 4.1955 | 4.0102 | 0.1853 | 69.9 |

Discussion of Example 4 Series

· With the additive-free electrolytic liquid, compared with the battery (Comparative Example 4-2) that used a negative electrode containing a "second graphite" having a D/G ratio of 0.7 or less (or a full-width at half-maximum of the G-band of 28 $cm^{-1}$ or less), the battery (Comparative Example 4-1) that used a negative electrode containing a "first graphite" having a D/G ratio of greater than 0.7 (or a full-width at half-maximum of the G-band of greater than 28 $cm^{-1}$) showed an increase in self-discharge ($\Delta V$), but by adding the various additives described in Tables 5 and 6 to the electrolytic liquid (in each of the Examples), it was confirmed that in addition to a suppression of self-discharge during storage at 60°C for 28 days, self-discharge during storage at 80°C for 14 days was also suppressed. In addition, it was confirmed that the amount of Ni eluted due to a side reaction was also reduced. Specifically, the following were confirmed.
· It was confirmed that even when a negative electrode containing the "first graphite" was used, adding trimethylsilyl polyphosphate (PPSE-1) to the electrolytic liquid resulted in a greater suppression of self-discharge during storage at 60°C for 28 days and during storage at 80°C for 14 days than in a case in which the negative electrode containing the "second graphite" was used. In addition, the amount of Ni detected by ICP analysis was reduced by the addition of PPSE-1, and therefore it was confirmed that elution of Ni from the positive electrode was suppressed.
· Even in a case in which a trimethylsilyl polyphosphate (PPSE-2, PPSE-3) containing a large amount of branched structures was used, the same tendency as that of the commercially available trimethylsilyl polyphosphate (PPSE-1) was exhibited. In other words, it was confirmed that by adding PPSE-2 or PPSE-3 to the electrolytic liquid, self-discharge during storage at 60°C for 28 days and during storage at 80°C for 14 days was suppressed, and the detected amount of Ni was reduced. Although the reasons for the following are unclear, it was confirmed that PPSE-2 and PPSE-3 having a peak (Pb) indicating a branched structure had a smaller detected amount of Ni than the PPSE-1 having no Pb peak, and Ni elution from the positive electrode was further suppressed. It is presumed that self-discharge was improved as a result.
· Even when ethyl polyphosphate (PPE) containing a large amount of branched structures was used, the same tendency as that of trimethylsilyl polyphosphate (PPSE-1) was exhibited. In other words, it was confirmed that by adding PPE to the electrolytic liquid, self-discharge during storage at 60°C for 28 days and during storage at 80°C for 14 days was suppressed, and the detected amount of Ni was reduced.
· Even when (triisopropylsilyl) polyphosphate [PPSE(TIPS)] or [(tert-butyl)dimethylsilyl] polyphosphate (PPSE(TBDMS)) was used, the same tendency as that of trimethylsilyl polyphosphate (PPSE-1) was exhibited. In other words, it was confirmed that by adding PPSE(TIPS) or PPSE(TBDMS) to the electrolytic liquid, self-discharge during storage at 60°C for 28 days and during storage at 80°C for 14 days was suppressed, and the detected amount of Ni was reduced.

## Claims

**1.** A non-aqueous electrolyte secondary battery comprising:

a non-aqueous electrolytic liquid containing, as an electrolyte salt, a sulfonylimide compound represented by General Formula (1), and as an electrolyte solvent, at least one carbonate-based solvent selected from the group consisting of a chain carbonate-based solvent and a saturated cyclic carbonate-based solvent, and the non-aqueous electrolytic liquid having dissolved therein as an additive, at least one carbonate species selected from the group consisting of carbon dioxide ($CO_2$), carbon monoxide (CO), a bicarbonate ion ($HCO_3^-$), and a carbonate ion ($CO_3^{2-}$), and/or containing at least one selected from the group consisting of an unsaturated cyclic carbonate-based compound, a compound represented by General Formula (4), and a phosphorus atom-containing compound represented by General Formula (5);
a negative electrode containing, as a negative electrode active material, a first graphite having a peak area ratio (D/G ratio) of a D-band and a G-band analyzed by Raman spectroscopy of greater than 0.7, and containing a second graphite having a D/G ratio of 0.7 or less at an amount of from 0 mass% to 10 mass% per 100 mass% of a total amount of the first graphite and the second graphite; and
a positive electrode:

(1): $LiN(RSO_2)(FSO_2)$

(where R represents a fluorine atom, an alkyl group having 1 to 6 carbon atoms, or a fluoroalkyl group having 1 to 6

carbon atoms)

(4): $MPO_cF_d$

(M: alkali metal element, c: $1 \le c \le 3$, d: $1 \le d \le 3$)

(5): $[-P(=O)(OR^1)O-]_n$

(in General Formula (5), $R^1$ represents an alkyl group having 1 to 6 carbon atoms (with an optional substituent), a fluoroalkyl group having 1 to 6 carbon atoms (with an optional substituent), an aryl group (with an optional substituent), a silyl group (with an optional substituent), an alkali metal atom, an onium salt, or a hydrogen atom, and n is 2 or greater).

**2.** A non-aqueous electrolyte secondary battery comprising:

a non-aqueous electrolytic liquid containing, as an electrolyte salt, a sulfonylimide compound represented by General Formula (1), and as an electrolyte solvent, at least one carbonate-based solvent selected from the group consisting of a chain carbonate-based solvent and a saturated cyclic carbonate-based solvent, and the non-aqueous electrolytic liquid having dissolved therein as an additive, at least one carbonate species selected from the group consisting of carbon dioxide ($CO_2$), carbon monoxide (CO), a bicarbonate ion ($HCO_3^-$), and a carbonate ion ($CO_3^{2-}$), and/or containing at least one selected from the group consisting of an unsaturated cyclic carbonate-based compound, a compound represented by General Formula (4), and a phosphorus atom-containing compound represented by General Formula (5);
a negative electrode containing, as a negative electrode active material, a first graphite having a full-width at half-maximum of a G-band analyzed by Raman spectroscopy of greater than 28 $cm^{-1}$, and containing a second graphite having a full-width at half-maximum of the G-band of 28 $cm^{-1}$ or less at an amount of from 0 mass% to 10 mass% per 100 mass% of a total amount of the first graphite and the second graphite; and
a positive electrode:

(1): $LiN(RSO_2)(FSO_2)$

(where R represents a fluorine atom, an alkyl group having 1 to 6 carbon atoms, or a fluoroalkyl group having 1 to 6 carbon atoms)

(4): $MPO_cF_d$

(M: alkali metal element, c: $1 \le c \le 3$, d: $1 \le d \le 3$)

(5): $[-P(=O)(OR^1)O-]_n$

(in General Formula (5), $R^1$ represents an alkyl group having 1 to 6 carbon atoms (with an optional substituent), a fluoroalkyl group having 1 to 6 carbon atoms (with an optional substituent), an aryl group (with an optional substituent), a silyl group (with an optional substituent), an alkali metal atom, an onium salt, or a hydrogen atom, and n is 2 or greater).

**3.** The non-aqueous electrolyte secondary battery according to claim 1 or 2, wherein the sulfonylimide compound represented by General Formula (1) includes $LiN(FSO_2)_2$.

**4.** The non-aqueous electrolyte secondary battery according to any one of claims 1 to 3, wherein the unsaturated cyclic carbonate-based compound includes vinylene carbonate.

**5.** The non-aqueous electrolyte secondary battery according to any one of claims 1 to 3, wherein the compound represented by General Formula (4) includes at least one selected from the group consisting of $Li_2PO_3F$ and $LiPO_2F_2$.

**6.** The non-aqueous electrolyte secondary battery according to any one of claims 1 to 3, wherein the compound represented by General Formula (5) includes at least one selected from the group consisting of trimethylsilyl polyphosphate, ethyl polyphosphate, (triisopropylsilyl) polyphosphate, and [(tert-butyl) dimethylsilyl] polyphosphate.

7. The non-aqueous electrolyte secondary battery according to any one of claims 1 to 3, wherein the additive includes a phosphorus atom-containing compound represented by General Formula (5), and
the compound represented by General Formula (5) includes at least one selected from the group consisting of trimethylsilyl polyphosphate, ethyl polyphosphate, (triisopropylsilyl) polyphosphate, and [(tert-butyl) dimethylsilyl] polyphosphate.

8. The non-aqueous electrolyte secondary battery according to any one of claims 1 to 7, wherein the electrolyte salt includes at least one selected from the group consisting of a compound represented by General Formula (2), a compound represented by General Formula (3), and $LiAsF_6$.

(2): $LiPF_a(C_mF_{2m+1})_{6-a}$

(a: $0 \leq a \leq 6$, m: $1 \leq m \leq 4$)

(3): $LiBF_6(C_nF_{2n+1})_{4-b}$

(b: $0 \leq b \leq 4$, n: $1 \leq n \leq 4$)

FIG. 1

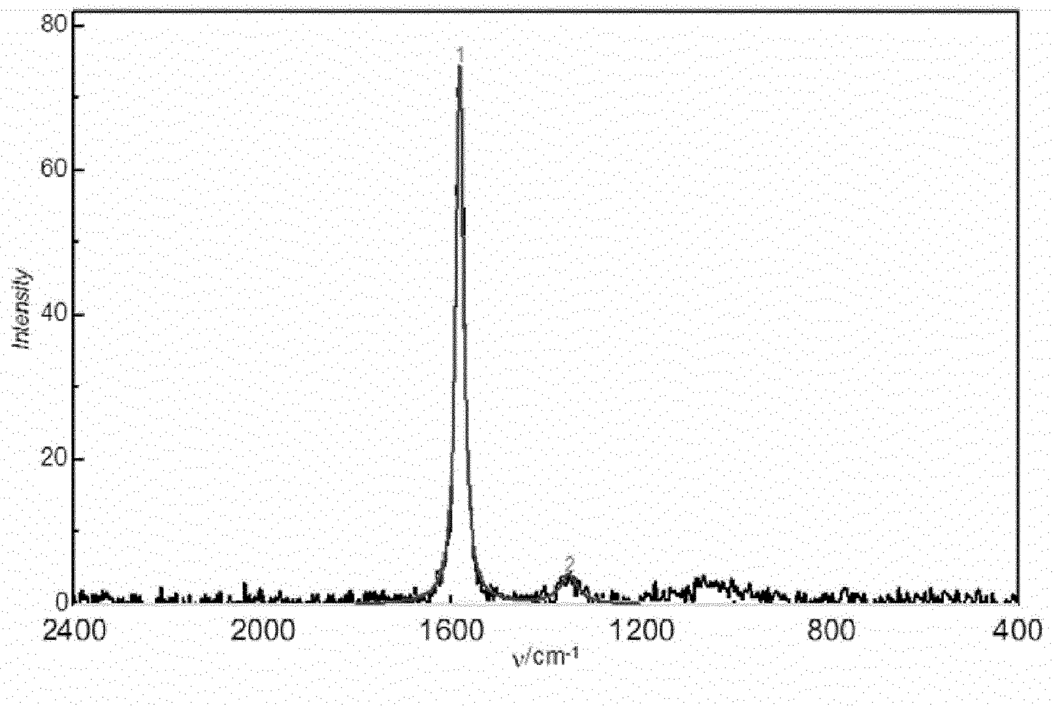
80
60
40
20
0
Intensity
1
2
2400
2000
1600
1200
800
400
ν/cm-1

FIG. 2

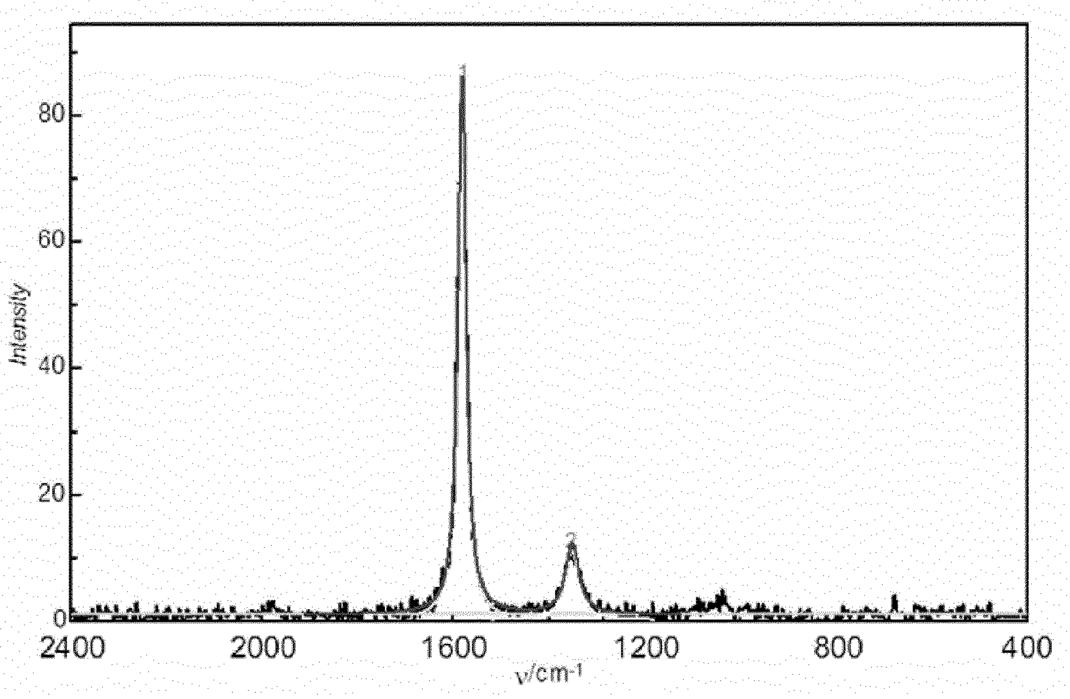
80
60
40
20
0
Intensity
1
2
2400
2000
1600
1200
800
400
ν/cm-1

FIG. 3

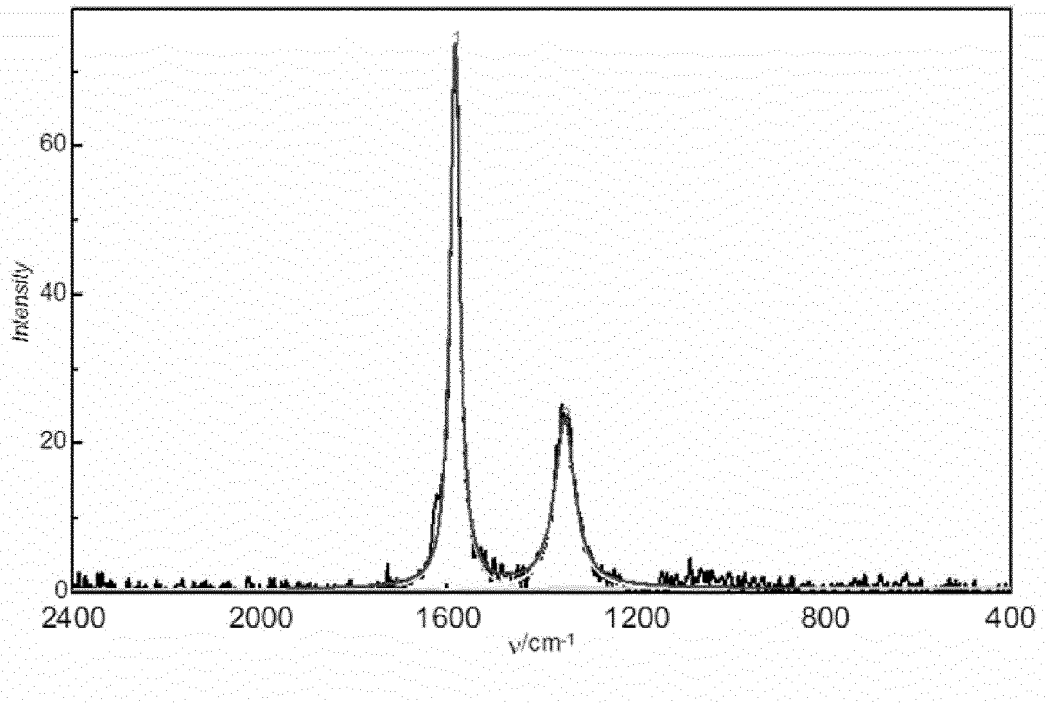
Intensity
60
40
20
0
2400
2000
1600
1200
800
400
ν/cm-1

FIG. 4

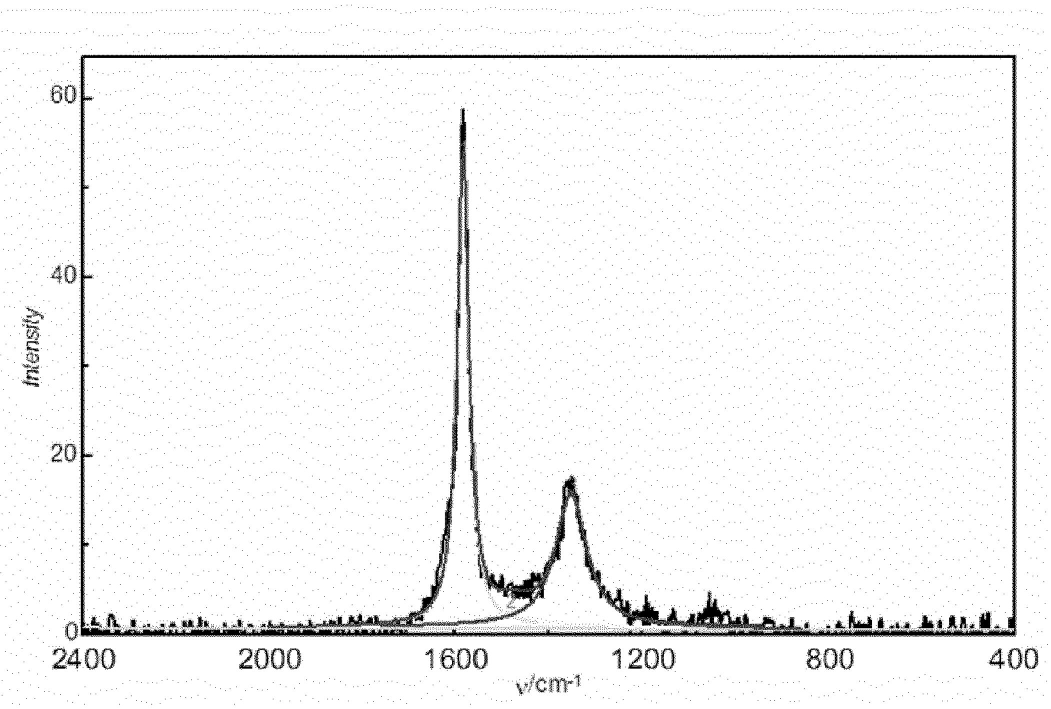
Intensity
60
40
20
0
2400
2000
1600
1200
800
400
ν/cm-1

FIG. 5

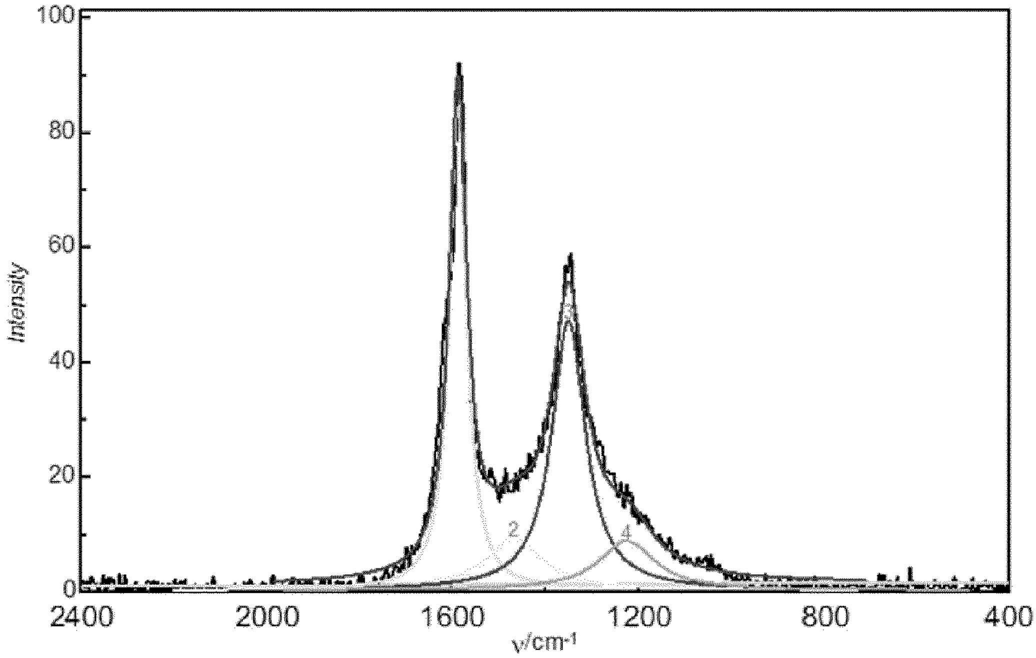
100
80
60
40
20
0
Intensity
2400
2000
1600
1200
800
400
ν/cm-1
2
4

FIG. 6

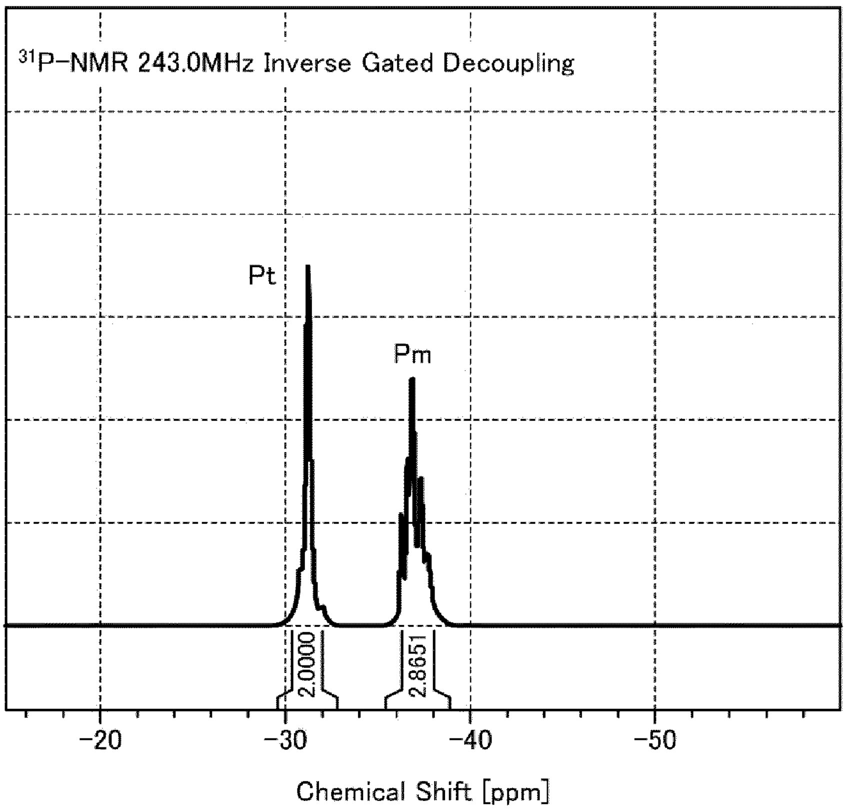
31P-NMR 243.0MHz Inverse Gated Decoupling
Pt
Pm
2.0000
2.8651
−20
−30
−40
−50
Chemical Shift [ppm]

FIG. 7

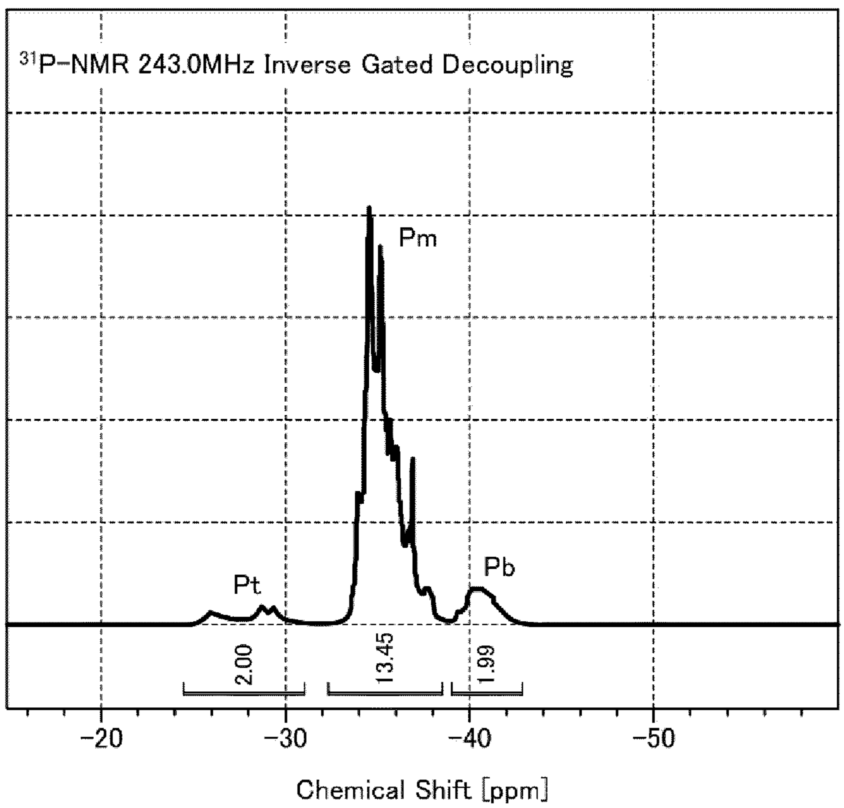

$^{31}$P-NMR 243.0MHz Inverse Gated Decoupling
Pm
Pt
Pb
2.00
13.45
1.99
−20
−30
−40
−50
Chemical Shift [ppm]

FIG. 8

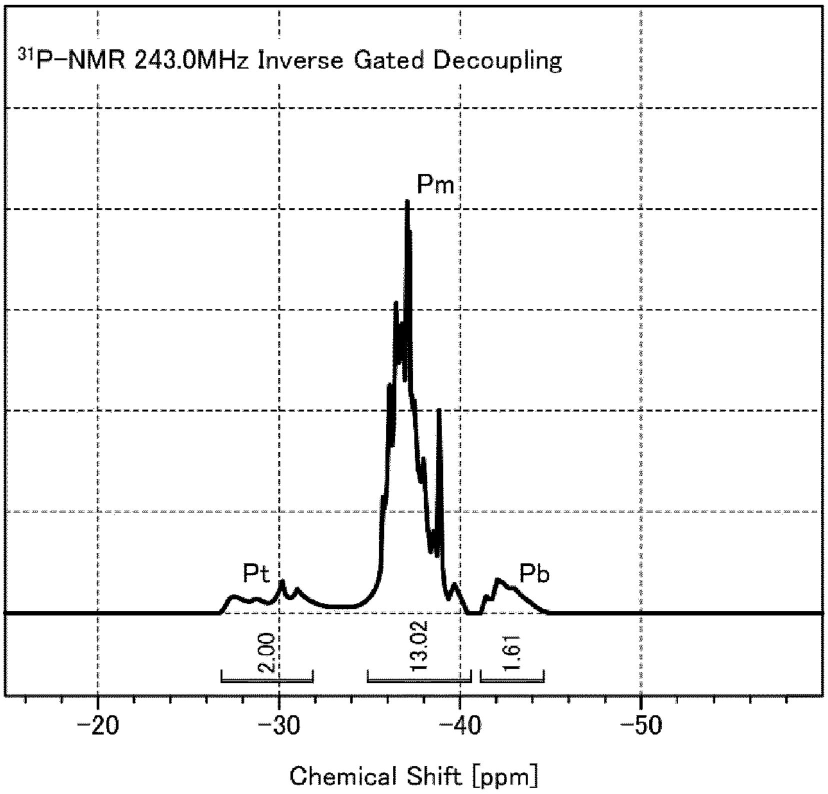

$^{31}$P-NMR 243.0MHz Inverse Gated Decoupling
Pm
Pt
Pb
2.00
13.02
1.61
−20
−30
−40
−50
Chemical Shift [ppm]

**INTERNATIONAL SEARCH REPORT**

International application No. **PCT/JP2023/038691**

**A. CLASSIFICATION OF SUBJECT MATTER**

***H01M 10/052***(2010.01)i; ***H01M 4/36***(2006.01)i; ***H01M 4/587***(2010.01)i; ***H01M 10/0567***(2010.01)i; ***H01M 10/0568***(2010.01)i; ***H01M 10/0569***(2010.01)i
FI: H01M10/052; H01M10/0568; H01M10/0569; H01M10/0567; H01M4/587; H01M4/36 D

According to International Patent Classification (IPC) or to both national classification and IPC

**B. FIELDS SEARCHED**

Minimum documentation searched (classification system followed by classification symbols)

H01M4/36; H01M4/587; H01M10/052-10/0587

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2022/065198 A1 (NIPPON SHOKUBAI CO., LTD.) 31 March 2022 (2022-03-31) claims, paragraphs [0126], [0166]-[0295] | 1-6, 8<br>1-8 |
| P, Y | WO 2022/239807 A1 (NIPPON SHOKUBAI CO., LTD.) 17 November 2022 (2022-11-17) claims 1, 7, paragraphs [0086], [0316]-[0355] | 1-8 |
| A | JP 2016-192401 A (ASAHI KASEI CORP.) 10 November 2016 (2016-11-10) claims, paragraphs [0027], [0028] | 1-8 |
| A | KR 10-2017-0000903 A (SAMSUNG SDI CO., LTD.) 04 January 2017 (2017-01-04) claims | 1-8 |
| A | WO 2016/209840 A2 (WILDCAT DISCOVERY TECHNOLOGIES, INC.) 29 December 2016 (2016-12-29) claims | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 December 2023** | **26 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/038691**

| Patent document cited in search report | Publication date (day/month/year) | Patent family member(s) | Publication date (day/month/year) |
|---|---|---|---|
| WO 2022/065198 A1 | 31 March 2022 | EP 4207383 A1<br>claims, paragraphs [0125], [0161]-[0264]<br>CN 116097470 A<br>KR 10-2023-0061509 A | |
| WO 2022/239807 A1 | 17 November 2022 | (Family: none) | |
| JP 2016-192401 A | 10 November 2016 | (Family: none) | |
| KR 10-2017-0000903 A | 04 January 2017 | (Family: none) | |
| WO 2016/209840 A2 | 29 December 2016 | US 2016/0372788 A1<br>US 2017/0244130 A1<br>US 2018/0309158 A1<br>CN 108064425 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022065198 A
- JP 6646522 B
- JP 2016091785 A
- JP 2016192401 A
- KR 20170000903 A
- WO 2016209840 A